(19) **Europäisches Patentamt**
**European Patent Office**
**Office européen des brevets**

(11) **EP 3 403 345 B1**

(12) **EUROPEAN PATENT SPECIFICATION**

(45) Date of publication and mention
of the grant of the patent:
**04.12.2019 Bulletin 2019/49**

(21) Application number: **16787569.9**

(22) Date of filing: **11.10.2016**

(51) Int Cl.:
***H04L 1/00*** (2006.01)

(86) International application number:
**PCT/IB2016/056083**

(87) International publication number:
**WO 2017/122062 (20.07.2017 Gazette 2017/29)**

(54) **ADAPTING MEASUREMENT PROCEDURE OF NB-IOT**

ANPASSUNG DES NB-IOT-MESSVERFAHRENS

ADAPTATION DE PROCÉDURE DE MESURE DE NB-IOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2016 US 201662278330 P**

(43) Date of publication of application:
**21.11.2018 Bulletin 2018/47**

(73) Proprietor: **Telefonaktiebolaget LM Ericsson (PUBL)**
**164 83 Stockholm (SE)**

(72) Inventors:
- **THANGARASA, Santhan**
**SE-162 44 Vällingby (SE)**
- **KAZMI, Muhammad**
**SE-174 64 Sundbyberg (SE)**

(74) Representative: **Ericsson**
**Patent Development**
**Torshamnsgatan 21-23**
**164 80 Stockholm (SE)**

(56) References cited:
**WO-A1-2015/112072    WO-A1-2015/116870**

- **ZTE: "UL power control for NB-IoT", 3GPP DRAFT; R1-160059 UL POWER CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 11 January 2016 (2016-01-11), XP051064642, Retrieved from the Internet: URL:http://www.3gpp.org/ftp/tsg_ran/WG1_RL 1/TSGR1_AH/LTE_NB-IoT_1601/Docs/ [retrieved on 2016-01-11]**
- **SONY: "Considerations on PRACH resources for NB-IoT", 3GPP DRAFT; R2-160484 - NBIOT PRACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Budapest, HU; 20160119 - 20160121 12 January 2016 (2016-01-12), XP051066417, Retrieved from the Internet: URL:http://www.3gpp.org/ftp/tsg_ran/WG2_RL 2/TSGR2_AHs/2016_01_LTE_NB_IoT/Docs/ [retrieved on 2016-01-12]**
- **HUAWEI ET AL: "Idle Mode Mobility", 3GPP DRAFT; R2-156762 IDLE MODE MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051006080, Retrieved from the Internet: URL:http://www.3gpp.org/ftp/Meetings_3GPP_ SYNC/RAN2/Docs/ [retrieved on 2015-11-16]**

**Description**

TECHNICAL FIELD

The present disclosure relates, in general, to wireless communications and, more particularly, to adapting a measurement procedure of narrowband internet-of-things.

BACKGROUND

Machine-to-machine (M2M) communication (or machine-type communication (MTC) or Internet-of-Things (IoT)) is used for establishing communication between devices and between devices and humans. The communication may, for example, include exchange of data, signaling, measurement data, configuration information, and other suitable types of communication. The device size may vary from that of a wallet to that of a base station. IoT devices may be used for applications like sensing environmental conditions (e.g., temperature reading), metering or measurement (e.g., electricity usage, etc.), fault finding, error detection, and other suitable applications. In these applications, the IoT devices are active very seldom, generally over a consecutive duration depending upon the type of service (e.g., about 200 ms once every 2 seconds, about 500 ms every 60 minutes, etc.). The IoT device may also perform measurements on other frequencies or other Radio Access Technologies (RATs).

The path loss between an IoT device and a base station can be very large, such as, for example, in scenarios where the IoT device is used as a sensor or metering device located in a remote location (such as in the basement of a building). In such scenarios, signal reception from the base station is very challenging. In some cases, the path loss can be worse than 20 dB compared to normal operation. In order to cope with such challenges, the coverage in uplink (UL) and/or in downlink (DL) has to be substantially enhanced with respect to the normal coverage (also known as legacy coverage). This can be achieved by employing one or more advanced techniques in the user equipment (UE) and/or in the radio network node for enhancing the coverage. Examples of such advanced techniques include, but are not limited to: transmit power boosting; repetition of transmitted signal; applying additional redundancy to the transmitted signal; and use of an advanced and/or enhanced receiver. When employing such coverage enhancing techniques, the IoT device is generally regarded to be operating in "coverage enhancing mode" or "coverage extending mode."

A low complexity UE, such as a UE with 1 receiver, may also be capable of supporting an enhanced coverage mode of operation. The coverage level of the UE with respect to a cell may be expressed in terms of signal level, such as signal quality, signal strength or path loss with respect to that cell.

Radio measurements done by the UE are typically performed on the serving cell as well as on neighbour cells over some known reference symbols or pilot sequences. The measurements may be done on cells on an intra-frequency carrier, inter-frequency carrier(s), as well as on inter-RAT carriers(s), depending on the capability of the UE (i.e., whether the UE supports that RAT). To enable inter-frequency and inter-RAT measurements for a UE requiring gaps, the network has to configure the measurement gaps.

The measurements are done for various purposes. Some example measurement purposes include, but are not limited to: mobility; positioning; self-organizing network (SON); minimization of drive tests (MDT); operation and maintenance (O&M); and network planning and optimization. Examples of measurements in Long Term Evolution (LTE) include, but are not limited to: cell identification (also known as Physical Cell ID (PCI) acquisition); Reference Symbol Received Power (RSRP); Reference Symbol Received Quality (RSRQ); acquisition of system information (SI); cell global ID (CGI) acquisition; Reference Signal Time Difference (RSTD); UE receive-transmit (RX-TX) time difference measurement; and Radio Link Monitoring (RLM), which consists of Out-of- Synchronization (out-of-sync) detection and In-Synchronization (in-sync) detection). Channel State Information (CSI) measurements performed by the UE are used, for example, for scheduling, link adaptation, etc. by the network. Examples of CSI measurements or CSI reports include, but are not limited to: Channel Quality Indicator (CQI); Precoding Matrix Indicator (PMI); and Rank Indicator (RI). CSI measurements may be performed on reference signals such as Cell-Specific Reference Signals (CRS), Channel State Information Reference Signals (CSI-RS), or Demodulation Reference Signals (DMRS).

The measurements may be unidirectional (e.g., DL or UL) or bidirectional (e.g., having UL and DL components such as, for example, RX-TX, Round-Trip Time (RTT), or other suitable measurements.

The DL subframe # 0 and subframe # 5 carry synchronization signals (i.e., both Primary Synchronization Signal (PSS) and Secondary Synchronization Signal (SSS)). In order to identify an unknown cell (e.g., a new neighbor cell), the UE has to acquire the timing of that cell and eventually the PCI. This is referred to as cell search or cell identification (or even cell detection). Subsequently, the UE measures RSRP and/or RSRQ of the newly identified cell in order to use the measurement itself and/or report the measurement to a network node. In total, there are 504 PCIs. The cell search is also a type of measurement.

The measurements are done in all Radio Resource Control (RRC) states. For example, the measurements are done in RRC IDLE and RRC CONNECTED states.

In RRC IDLE state, the UE performs measurements (e.g., RSRP, RSRQ, Reference Signal-Signal to Interference plus Noise Ratio (RS-SINR), etc.) for cell selection and reselection purposes. When camped on a cell, the UE regularly searches for a better cell according to the cell reselection criteria. If a better cell is found, that cell is selected. A change of cell may imply a change to a new cell within the same RAT, or to a cell of a different RAT. That is, the UE performs intra-frequency, inter-frequency or inter-RAT cell reselection.

The cell reselection may be performed by the UE autonomously based on the network configured parameters (e.g., Absolute Radio Frequency Channel Number (ARFCN) of carriers, signal quality/strength offsets, cell reselection timer, etc.).

For example, in the case of intra-frequency cell reselection in LTE, the UE identifies new intra-frequency cells and performs RSRP and RSRQ measurements of identified intra-frequency cells without an explicit intra-frequency neighbor list containing physical layer cell identities. The UE is able to evaluate whether a newly detectable intra-frequency cell meets the reselection criteria within a pre-defined time period. This time period is defined as a function of the discontinuous reception (DRX) cycle used in idle state.

The objective of Narrowband IoT (NB-IoT) is to specify a radio access for cellular IoT, based to a great extent on a non-backward-compatible variant of Evolved-Universal Terrestrial Radio Access (E-UTRA), which addresses improved indoor coverage, support for a massive number of low-throughput devices, low delay sensitivity, ultra-low device cost, low device power consumption and optimized network architecture.

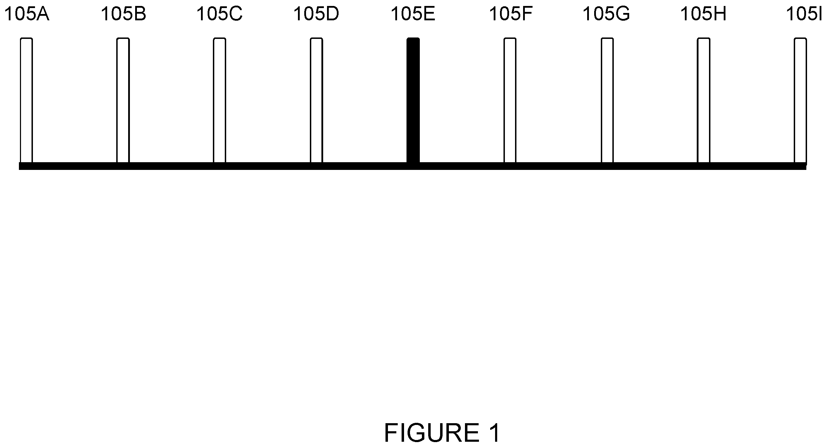

The NB-IoT carrier bandwidth (BW2) is 200 KHz. Examples of operating bandwidth (BW1) of LTE include, but are not limited to, 1.4 MHz, 3 MHz, 5 MHz, 10 MHz, 15 MHz, and 20 MHz. NB-IoT supports 3 different modes of operation: "stand-alone operation," "guard-band operation," and "in-band operation." These different mode of operation are described in more detail below with respect to FIGURES 1-3.

FIGURE 1 is a timing diagram illustrating stand-alone operation of an NB-IoT UE. More particularly, FIGURE 1 illustrates a plurality of carriers 105A-105I. Carrier 105E corresponds to a stand-alone NB-IoT carrier. Stand-alone operation utilizes, for example, the spectrum currently being used by GERAN systems as a replacement of one or more GSM carriers. In principle, it operates on any carrier frequency that is neither within the carrier of another system nor within the guard band of another system's operating carrier. The other system can be another NB-IoT operation or any other RAT (e.g., LTE).

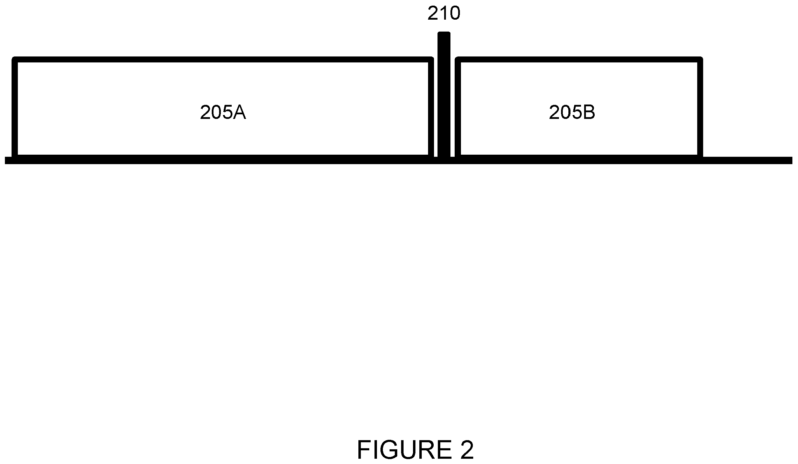

FIGURE 2 is a timing diagram illustrating guard-band operation of an NB-IoT UE. More particularly, FIGURE 2 illustrates two LTE carriers 205A and 205B, and guard-band carrier 210. Guard-band operation utilizes the unused resource blocks within a LTE carrier's guard-band. In the example of FIGURE 2, carrier 210 corresponds to an LTE guard-band carrier. The term "guard band" may be interchangeably referred to as guard bandwidth. As an example, in case of LTE BW of 20 MHz (i.e., BW1 = 20 MHz or 400 resource blocks (RBs)), the guard-band operation of NB-IoT can take place anywhere outside the central 18 MHz (but within 20 MHz) LTE bandwidth.

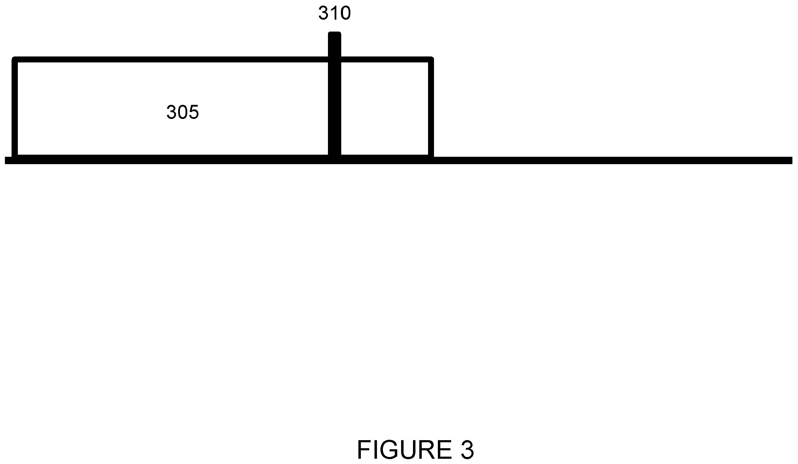

FIGURE 3 is a timing diagram illustrating in-band operation of an NB-IoT UE. More particularly, FIGURE 3 illustrates LTE carrier 305 and in-band carrier 310. In-band operation utilizes RBs within a normal LTE carrier, such as carrier 305. In-band operation may be interchangeably referred to as in-bandwidth operation. More generally, the operation of one RAT within the bandwidth of another RAT is also referred to as in-band operation. As an example, in a LTE bandwidth of 50 RBs (i.e., BW1 = 10 MHz or 50 RBs), NB-IoT operation over one RB within the 50 RBs is referred to as in-band operation.

In NB-IoT, the DL transmission is based on orthogonal frequency division multiplexing (OFDM) with 15 kHz subcarrier spacing for all the modes of operation: stand-alone, guard-band, and in-band operation. For UL transmission, both multi-tone transmissions based on Single Carrier-Frequency Division Multiple Access (SC-FDMA), and single-tone transmission is supported. This means that the physical waveforms for NB-IoT in DL and also partly in UL are similar to legacy LTE.

In the DL design, NB-IoT supports both master information broadcast (MIB) and system information broadcast (SIB) which are carried by different physical channels. For in-band operation, it is possible for a NB-IoT UE to decode the Narrowband Physical Broadcast Channel (NPBCH) without knowing the legacy physical resource block (PRB) index. NB-IoT supports both DL physical control channel (Narrowband Physical Downlink Control Channel (NPDCCH) and downlink physical shared channel (Narrowband Physical Downlink Shared Channel (NPDSCH)). The operation mode of NB-IoT must be indicated to the UE. Currently, the 3rd Generation Partnership Project (3GPP) considers indication by means of Narrowband-Secondary Synchronization Signal (NSSS), Narrowband Master Information Block (NMIB), which is transmitted over NPBCH or perhaps other DL signals.

Currently, the reference signals used in NB-IoT have not been decided. It is expected, however, that the general design principle will follow that of legacy LTE. The DL synchronization signal will most likely consist of Narrowband PSS (NPSS) and NSSS.

WO 2015/112072 A1 describes a method for adaptive radio link monitoring.

WO 2015/116870 A1 describes a method for reconfiguration of coverage enhancement mode.

The document "UL power control for NB-IoT", ZTE, 3GPP TSG RAN WG1 NG-IoT Ad-Hoc Meeting, R1-160059, January 2016 describes power considerations for the Narrowband Physical Random Access Channel (NB-PRACH) and the Narrowband Physical Uplink Shared Channel (NB-PUSCH)

SUMMARY

The invention is defined in the claims appended hereto.

To address deficiencies associated with existing approaches, disclosed is a method in a Narrowband Internet of Things, NB-IoT, node. The method comprises obtaining information related to an operational mode of a first cell to be measured by the node. The method comprises selecting a measurement procedure from a plurality of possible measurement procedures based on the obtained information related to the operational mode of the first cell, wherein one or more measurement parameters of the selected measurement procedure are adapted to the operational mode of the first cell. The method comprises performing one or more measurements in the first cell using the selected measurement procedure.

The operational mode of the first cell comprises one of: an in-band mode; a stand-alone mode; and a guard-band mode. The node may comprise one of: a wireless device; and a network node. The one or more measurement parameters of the selected measurement procedure may comprise one or more of: a measurement time; a measurement reporting time or delay; a measurement accuracy; a number of cells to be measured over the measurement time; a cell selection delay; a cell reselection delay; and a measurement rate for one or more of cell selection and cell reselection. In certain embodiments, the method may comprise transmitting information about the selected measurement procedure to another node.

In certain examples, obtaining information related to the operational mode of the first cell may comprise one or more of: obtaining historical data or statistics that relates a cell ID of the first cell and one or more operational modes supported by the first cell; receiving information from a serving cell of the node about the operational mode of the first cell; reading system information of the first cell, the system information indicating the operational mode of the first cell; and estimating interference or interference statistics received from the first cell, wherein the estimated interference or interference statistics provide an indication of the operational mode of the first cell.

In certain examples, the method may comprise obtaining information related to an operational mode of a second cell to be measured by the node, wherein selecting the measurement procedure from the plurality of possible measurement procedures is further based on the operational mode of the second cell.

In certain examples, the method may comprise obtaining information regarding an operational mode to be used by the node after a cell change procedure, wherein obtaining the information regarding the operational mode to be used by the node after the cell change procedure may comprise one or more of: obtaining pre-defined information regarding the operational mode of the node after a cell change procedure; autonomously determining the operational mode of the node after the cell change procedure; and receiving the information regarding the operational mode of the node after the cell change procedure. The method may comprise obtaining information related to one or more configuration parameters; and performing the cell change procedure using the obtained information related to the one or more configuration parameters, wherein the one or more configuration parameters may comprise one or more of: a carrier frequency; a time domain filtering coefficient; a hysteresis parameter; a cell change offset or margin; a measurement bandwidth; and a type of measurement to be performed.

In certain examples, the method may comprise obtaining information on a coverage enhancement level of the node with respect to the first cell. Obtaining information on the coverage enhancement level of the node with respect to the first cell may comprise: performing one or more radio measurements with respect to the first cell; and determining the coverage enhancement level of the node with respect to the first cell based on the one or more radio measurements performed with respect to the first cell. Obtaining information on the coverage enhancement level of the node with respect to the first cell may comprise: performing one or more radio measurements with respect to a serving cell of the node; and determining the coverage enhancement level of the node with respect to the first cell based on the one or more radio measurements performed with respect to the serving cell. Obtaining information on the coverage enhancement level of the node with respect to the first cell may comprise: performing one or more radio measurements with respect to a neighbor cell; and determining the coverage enhancement level of the node with respect to the first cell based on the one or more radio measurements performed with respect to the neighbor cell. Selecting the measurement procedure from the plurality of possible measurement procedures may also be based on the obtained information on the coverage enhancement level of the node with respect to the first cell. In certain embodiments, the method may comprise monitoring one or more transmitted reference signals; determining a signal transmission pattern for the first cell based on the one or more transmitted reference signals; and wherein selecting the measurement procedure from the plurality of possible measurement procedures may be further based on the determined signal transmission pattern for the first cell.

In certain examples, the method may comprise determining one or more operational modes supported by the node, wherein selecting the measurement procedure from the plurality of possible measurement procedures may be further based on the determined one or more operational modes supported by the node.

Also disclosed is a node. The node comprises one or more processors. The one or more processors are configured to obtain information related to an operational mode of a first cell to be measured by the node. The one or more processors are configured to select a measurement procedure from a plurality of possible measurement procedures based on the obtained information related to the operational mode of the first cell, wherein one or more measurement parameters of the selected measurement procedure are adapted to the operational mode of the first cell. The one or more processors are configured to perform one or more measurements in the first cell using the selected measurement procedure. The operational mode comprises one of an in-band mode, a Stand-alone mode and a guard-band mode.

Certain examples of the present disclosure may provide one or more technical advantages. As one example, certain embodiments may advantageously allow a wireless device to improve its measurement performance as the choice of measurement procedure is adapted based on obtained information related to, for example, signal transmission configurations, operation types, and/or other suitable information. This may advantageously result in improved measurement accuracy, as well as, in some cases, reduced processing and improved battery life in the UE as the sampling frequency can be adapted based on the obtained information. As another example, certain embodiments may advantageously improve the performance of other functionalities that depend on reliable measurement performance. Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 is a timing diagram illustrating stand-alone operation of an NB-IoT UE;
FIGURE 2 is a timing diagram illustrating guard-band operation of an NB-IoT UE;
FIGURE 3 is a timing diagram illustrating in-band operation of an NB-IoT UE;
FIGURE 4 is a block diagram illustrating an example embodiment of a network, in accordance with certain embodiments;
FIGURE 5 is a flow diagram of a method in a node, in accordance with certain embodiments;
FIGURE 6 is a block schematic of an exemplary wireless device, in accordance with certain embodiments;
FIGURE 7 is a block schematic of an exemplary network node, in accordance with certain embodiments;
FIGURE 8 is a block schematic of an exemplary radio network controller or core network node, in accordance with certain embodiments;
FIGURE 9 is a block schematic of an exemplary wireless device, in accordance with certain embodiments; and
FIGURE 10 is a block schematic of an exemplary network node, in accordance with certain embodiments.

DETAILED DESCRIPTION

As described above, a UE identifies new cells and performs measurement on them. The identified cell could, for example, be the serving cell or neighboring cells. The existing approaches to measurement procedures described above have certain deficiencies. For example, existing measurement procedures using CRS may not work well for NB-IoT since the UE bandwidth is reduced to only 1 PRB. This means that the number of resource elements available for measurement are significantly reduced, which affects both the measurement accuracy and the measurement time/rate. Furthermore, a NB-IoT UE may be capable of two or more operational modes (e.g., stand-alone, guard-band, and in-band operation modes). This may further impact the measurement procedure of the UE. Thus, there is a need for new measurements for NB-IoT.

The present disclosure contemplates various embodiments that may address these and other deficiencies associated with existing approaches to measurement procedures in NB-IoT. In certain embodiments, a UE adapts its measurement procedure to meet one or more pre-defined measurement requirements that correspond to the operation mode used in the measured cell. The measurement procedure may be adapted based on any suitable characteristics. In certain embodiments, the measurement procedure is adapted based on at least the operational mode used in the cell to be measured. To illustrate, consider the following examples. A UE may use a measurement procedure comprising of a shorter measurement time with a larger sampling frequency/rate (i.e., above a threshold) if the operational mode used in a first cell is associated with denser transmission of discovery signals in time and/or frequency compared to those in cells with other modes of operation. In such a case, one set of measurement requirements are to be met by the UE for measuring on the first cell. In a second cell, however, where the operational mode is associated with coarser transmission of discovery signals in time and/or frequency, another set of measurement requirements are to be met by the UE (e.g., a lower measurement sampling frequency/rate and longer measurement period may be used for performing measurement on the second cell).

According to one example embodiment, a node obtains information related to an operational mode of a first cell to be measured by the node. In some cases, the node may be one of a wireless device (such as a UE) and a network node. The node may also obtain information on a coverage enhancement level of the node with respect to the first cell. The node selects a measurement procedure from a plurality of possible measurement procedures based on the obtained information related to the operational mode of the first cell. One or more measurement parameters of the selected measurement procedure are adapted to the operational mode of the first cell. In some cases, the node may select the measurement procedure from the plurality of possible measurement procedures also based on the obtained information on the coverage enhancement level of the node with respect to the first cell or any other suitable information. The node performs one or more measurements in the first cell using the selected measurement procedure.

The various embodiments described herein may have one or more technical advantages. As one example, certain embodiments may advantageously allow a UE to improve its measurement performance as the choice of measurement procedure is adapted based on obtained information related to, for example, signal transmission configurations, operation types, and/or other suitable information. This may advantageously result in improved measurement accuracy, as well as, in some cases, reduced processing and improved battery life in the UE as the sampling frequency can be adapted based on obtained information. As another example, certain embodiments may advantageously improve the performance of other functionalities that depend on reliable measurement performance (such as, for example, mobility, Automatic Neighbor Relation (ANR) and SON).

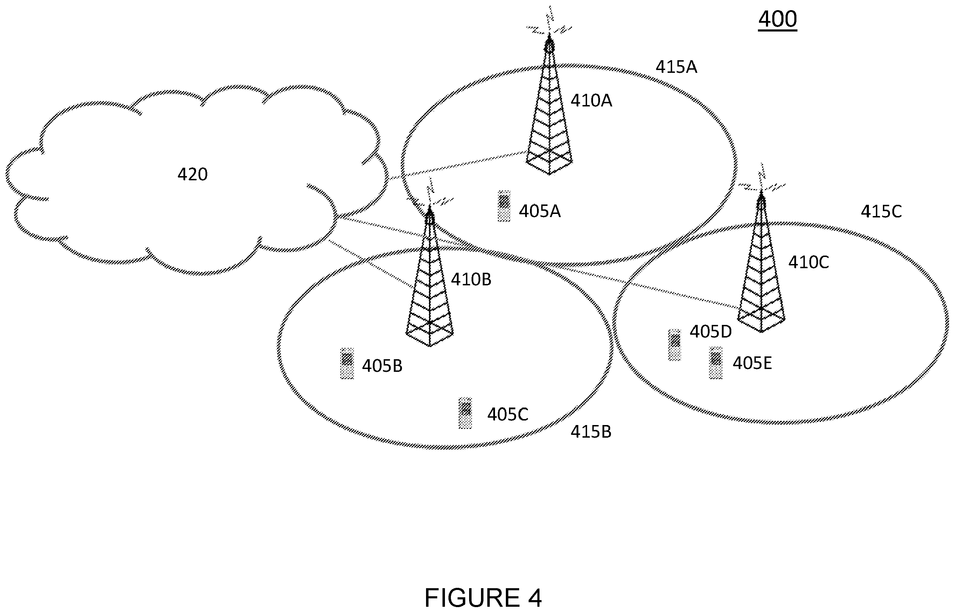

FIGURE 4 is a schematic diagram of a wireless communication network 400, in accordance with certain embodiments. Network 400 includes one or more UE(s) 405 (which may be interchangeably referred to as wireless devices 405, IoT device 405, NB-IoT device 405, or simply device 405) and network node(s) 410 (which may be interchangeably referred to as eNodeBs (eNBs) 410). More particularly, FIGURE 4 illustrates a plurality of UEs 405A-405E and a plurality of network nodes 410A-C.

UEs 405 may communicate with network nodes 410 over a wireless interface. For example, UE 405A may transmit wireless signals to one or more of network nodes 410, and/or receive wireless signals from one or more of network nodes 410. The wireless signals may contain voice traffic, data traffic, control signals, and/or any other suitable information. In some embodiments, an area of wireless signal coverage associated with a network node 410 may be referred to as a cell 415. In the example of FIGURE 4, the area of wireless signal coverage associated with network node 410A is cell 415A, the area of wireless signal coverage associated with network node 410B is cell 415B, and the area of wireless signal coverage associated with network node 410C is cell 415C. Although the example of FIGURE 4 shows a single cell 415 associated with each network node 410, the present disclosure contemplates that each network node 410 may have any suitable number of cells 415 associated with it. In some embodiments, UEs 405 may have D2D capability. Thus, UEs 405 may be able to receive signals from and/or transmit signals directly to another UE. For example, UE 405B may be able to receive signals from and/or transmit signals to UE 405C.

In certain embodiments, network nodes 410 may interface with a radio network controller. The radio network controller may control network nodes 410 and may provide certain radio resource management functions, mobility management functions, and/or other suitable functions. In certain embodiments, the functions of the radio network controller may be performed by network node 410. The radio network controller may interface with a core network node. In certain embodiments, the radio network controller may interface with the core network node via interconnecting network 420. Interconnecting network 420 may refer to any interconnecting system capable of transmitting audio, video, signals, data, messages, or any combination of the preceding. Interconnecting network 420 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for UEs 405. UEs 405 may exchange certain signals with the core network node using the non-access stratum layer. In non-access stratum signaling, signals between UEs 405 and the core network node may be transparently passed through the radio access network. In certain embodiments, network nodes 410 may interface with one or more network nodes over an internode interface. For example, network nodes 410A and 410B may interface over an X2 interface.

In some embodiments, the non-limiting term "UE" is used. As described above, example embodiments of network 400 may include one or more UEs 405, and one or more different types of network nodes capable of communicating (directly or indirectly) with UEs 405. UEs 405 described herein can be any type of wireless device capable of communicating with network nodes 410 or another UE over radio signals. UE 405 may also be a radio communication device, target device, device-to-device (D2D) UE, machine-type-communication UE or UE capable of machine to machine communication (M2M), a low-cost and/or low-complexity UE, a sensor/actuator equipped with UE, Tablet, mobile terminals, smart phone, laptop embedded equipped (LEE), laptop mounted equipment (LME), USB dongles, Customer Premises Equipment (CPE), an IoT device, a NB-IoT device, or any other suitable device.

Also, in some embodiments non-limiting generic terminology "network node" is used. It can be any kind of radio network node or any network node that communicates with a UE and/or with another network node. Examples of network nodes are a Node B, MeNB, SeNB, a network node belonging to MCG or SCG, base station (BS), radio base station, multi-standard radio (MSR) radio node such as MSR BS, eNode B, network controller, radio network controller (RNC), multi-cell/multicast coordination entity (MCE), base station controller (BSC), relay node, donor node controlling relay, base transceiver station (BTS), access point (AP), radio access point, transmission points, transmission nodes, remote radio unit (RRU), remote radio head (RRH), nodes in distributed antenna system (DAS), core network node (e.g. MSC, MME, SON node, coordinating node, etc.), O&M, OSS, positioning node (e.g. E-SMLC), MDT, an external node (e.g., third-party node, a node external to the current network), or any suitable network node.

Also in some embodiments the generic term "radio network node" is used. It can be any kind of a radio network node which may comprise any of BS, radio base station, BTS, BSC, network controller, RNC, eNB, Node B, MCE, relay node, AP, radio access point, RRU, RRH

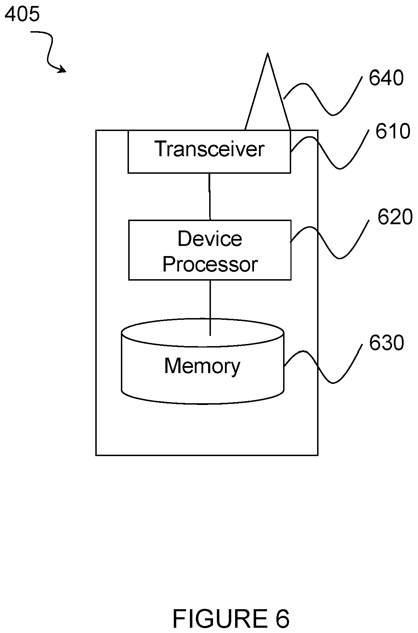

Example embodiments of UEs 405, network nodes 410, and other network nodes (such as radio network controller or core network node) are described in more detail with respect to FIGURES 6-10 below.

Although FIGURE 4 illustrates a particular arrangement of network 400, the present disclosure contemplates that the various embodiments described herein may be applied to a variety of networks having any suitable configuration. For example, network 400 may include any suitable number of UEs 405 and network nodes 410, as well as any additional elements suitable to support communication between UEs or between a UE and another communication device (such as a landline telephone). Furthermore, although certain embodiments may be described as implemented in an LTE network, the embodiments may be implemented in any appropriate type of telecommunication system supporting any suitable communication standards and using any suitable components, and are applicable to any RAT or multi-RAT systems in which the UE receives and/or transmits signals (e.g., data). For example, the various embodiments described herein may be applicable to IoT, NB-IoT, LTE, LTE-Advanced, UMTS, HSPA, GSM, cdma2000, WiMax, WiFi, another suitable radio access technology, or any suitable combination of one or more radio access technologies.

In certain embodiments, UEs 405 may be configured with Primary Cell (PCell) and Primary Secondary Cell (PSCell) or with PCell, PSCell and one or more Secondary Cells (SCells) such as in dual connectivity and/or carrier aggregation. The configured cells are UE specific (also known as serving cells of the UE).

The various embodiments described herein are applicable for a UE in a low-activity or in high-activity state. Examples of low-activity state include RRC IDLE state, idle mode, etc. Examples of high-activity state include RRC CONNECTED state, active mode, active state, etc. UEs 405 may be configured to operate in DRX or in non-DRX. If configured to operate in DRX, UEs 405 may still operate according to non-DRX (as long as UEs 405 receive new transmissions from the network node.

In some cases, a UE 405, such as UE 405A, is served by a serving cell which has already been identified by UE 405A. In the example of FIGURE 4, UE 405A may be served by cell 415A associated with network node 415A. UE 405A may identify at least one another cell, which may be referred to as a target cell or neighbor cell. In the example of FIGURE 4, UE 405A may identify one or more of cell 415B and 415C associated with network nodes 410B and 410C, respectively, as the target cell or neighbor cell. In some embodiments, serving cell 415A and the neighbor cell, such as cell 415B, are served or managed by a first network node, such as network node 410A, and a second network node, such as network node 410B, respectively. In some embodiments, the serving cell and neighbor cell may be served or managed by the same network node 410.

In certain embodiments, a node, such as UE 405A, obtains information related to an operational mode of a first cell to be measured by UE 405A, such as cell 415B. The operational mode may be any suitable operational mode. For example, the operational mode may be one or more of in-band mode, a stand-alone mode, and a guard-band mode. UE 405A selects a measurement procedure from a plurality of possible measurement procedures based on the obtained information related to the operational mode of first cell 415B. One or more measurement parameters of the selected measurement procedure are adapted to the operational mode of first cell 415B. UE 405A performs one or more measurements in first cell 415B using the selected measurement procedure.

UE 405A therefore takes into account at least the operational mode used in the cell on which measurement is performed to select (i.e., adapt) the measurement procedure. As described in more detail below, UE 405A may obtain other information instead of or in addition to the obtained information related to the operational mode of first cell 415B based on which UE 405A may select a measurement procedure. The other information may include, but is not limited to, one or more of: the coverage enhancement level of UE 405A with respect to the measured cell (i.e., first cell 415B); the operational modes supported by UE 405A; one or more operational modes used in the current serving cell 415A; and other operational modes used in one or more neighbor cells in addition to first cell 415B, such as neighbor cell 415C.

UE 405A may obtain information related to the operational mode of first cell 415B in any suitable manner. As one example, UE 405A may obtain information related to the operational mode of first cell 415B by obtaining historical data or statistics that relates a cell ID of first cell 415B and one or more operational modes supported by first cell 415B. The information may, for example, be stored information that relates the cell ID of first cell 415B and the supported mode(s) of operation by the corresponding cell. As another example, UE 405A may obtain information related to the operational mode of first cell 415B by receiving information from serving cell 415A (e.g., as part of a measurement configuration). As still another example, UE 405A may obtain information related to the operational mode of first cell 415B by reading SI of first cell 415B in cases where the SI transmits the supported operational mode(s) or the mode of operation currently used in first cell 415B. As yet another example, UE 405A may obtain information related to the operational mode of first cell 415B by estimating interference or interference statistics received from first cell 415B, which may provide an indication of the operational mode of first cell 415B (i.e., different modes may lead to different level of interference).

In certain embodiments, UE 405A may determine the operational modes of one or more cells in addition to first cell 415B. For example, UE 405A may obtain information related to an operational mode of a second cell. The second cell may be any suitable cell. For example, in certain embodiments the second cell may be one of serving cell 415A or neighbor cell 415C. UE 405A may determine the operational mode of one or more additional cells in any suitable manner. For example, UE 405A may obtain information related to the operational mode of the one or more additional cells in the same manner as described above with respect to first cell 415B. In certain embodiments, UE 405A may select the measurement procedure from the plurality of possible measurement procedures based on the operational mode of the one or more additional cells.

As described above, UE 405A selects a measurement procedure from a plurality of possible measurement procedures based at least on the obtained information related to the operational mode of first cell 415B. One or more measurement parameters of the selected measurement procedure are adapted to the operational mode of first cell 415B. The one or more measurement parameters may correspond to pre-defined UE measurement requirements associated with the operational mode used in the measured cell (e.g., cell 415B). The UE measurement requirements may be interchangeably referred to as performance requirements, Radio Resource Management (RRM) requirements, mobility requirements, positioning measurement requirements, etc. Examples of the measurement parameters (or UE measurement requirements) include, but are not limited to, a measurement time, a measurement reporting time or delay, measurement accuracy (e.g., RSRP/RSRQ accuracy), a number of cells to be measured over the measurement time, a cell selection delay, a cell reselection delay, a measurement rate for cell selection and/or cell reselection, etc. Examples of measurement time include L1 measurement period, cell identification time or cell search delay, evaluation period for cell selection or cell reselection, CGI acquisition delay, etc.

In some cases, UE 405A may have to meet different cell selection and/or cell reselection requirements (e.g., time to reselect a cell) depending on the operational mode used in a cell to be re-selected. The adaptation of measurement procedure based on operational mode is explained below with examples.

According to a first example, if in-band mode is used in first cell 415B (i.e., the cell to be measured), then UE 405A selects a measurement procedure that has a longer measurement time (T1), and performs one or more measurements (e.g., cell search, RSRP/RSRQ, etc.) over the longer measurement time (T1) according to the selected measurement procedure. This is because UE 405A needs to take more measurement samples to minimize the impact of interference caused by leakage of signals from the LTE cell into NB-IoT cell. In some cases, measurement time T1 may be above a first threshold. The first threshold may be defined in any suitable manner.

According to a second example, if stand-alone mode is used in first cell 415B (i.e., the cell to be measured), then UE 405A selects a measurement procedure that has a shorter measurement time (T2), and performs one or more measurements (e.g., cell search, RSRP/RSRQ, etc.) over the shorter measurement time T2 according to the selected measurement procedure. This is because UE 405A does not experience any interference due to leakage of any signal from the LTE cell into NB-IoT cell. In some cases, measurement time T2 may be equal to or below the first threshold.

According to a third example, if guard-band mode is used in first cell 415B (i.e., the cell to be measured), then UE 405A selects a measurement period over a longer measurement time (T3), and performs one or more measurements (e.g., cell search, RSRP/RSRQ, etc.) over the longer measurement time (T3) according to the selected measurement procedure. This is because UE 405A needs to take more measurement samples to minimize the impact of interference caused by the emission from LTE cell into NB-IoT cell. The actual value of interference depends on the emission level, which in turn depends on the maximum power of the LTE cell. In some cases, T3 may be larger than the first threshold, and may be longer than T1 described above.

According to a fourth example, the adaptation of the measurement procedure may depend on the operational modes used in more than one cell involved in the measurement (e.g., in serving cell 415A and in first cell 415B, which may be a neighbor cell, or on two neighbor cells (e.g., cells 415B and 415C)). This type of measurement is used for relative measurement (also known as a relative measurement reporting event). For example, if UE 405A compares measurements done on serving cell 415A with the measurement on neighbor cell 415B, then UE 405A may select the measurement procedure that corresponds to the operational modes used in serving cell 415A and measured neighbor cell 415B. As an example, if both cells 415A and 415B use the in-band modes, then UE 405A may have to perform this measurement over measurement time T1 described above. If cells 415A and 415B use different modes, then UE 405A may have to perform this measurement over the longest of the measurement times used for the two modes separately.

For example, assume in the context of the examples described above that the in-band and stand-alone modes are used in serving cell 415A and in the measured neighbor cell 415B, respectively. In this case, UE 405A may have to perform the relative measurement over the larger measurement time T1 instead of the shorter measurement time T2.

In certain embodiments, UE 405A may determine the operational modes it supports. It is assumed that UE 405A is capable of supporting two or more operational modes (e.g., at least any two of: in-band mode, stand-alone mode and guard-band mode described above). UE 405A may determine the operational modes it supports in any suitable manner. As one example, in certain embodiments UE 405A determines the operational modes it supports based on its radio access capability, which is stored in a memory of UE 405A. In such a scenario, UE 405A retrieves this information from memory, and based on this, UE 405A determines the supported operational modes. In certain embodiments, UE 405A may select a measurement procedure from the plurality of possible measurement procedures based on the determined one or more operational modes supported by UE 405A.

In certain embodiments, UE 405A may obtain information on a coverage enhancement level of UE 405A with respect to first cell 415B (i.e., the cell to be measured). UE 405A may select the measurement procedure from the plurality of possible measurement procedures based on the obtained information on the coverage enhancement level of UE 405A with respect to first cell 415B. As described above, UE 405A may operate under normal coverage, extended coverage or extreme coverage with respect to the cell to be measured. In some cases, these coverage classes may be interchangeably referred to as normal coverage and enhanced coverage. UE 405A may also operate in a plurality of coverage levels (e.g., normal coverage, enhanced coverage level 1, enhanced coverage level 2, enhanced coverage level 3 and so on).

The coverage level of UE 405A may be expressed in any suitable manner. For example, in certain embodiments the coverage level may be expressed in terms of: received signal quality and/or received signal strength at UE 405A with respect to serving cell 415A; and/or received signal quality and/or received signal strength at serving cell 415A with respect to UE 405A. Although the above examples express the coverage level of UE 405A with respect to serving cell 415A, the present disclosure contemplates that the coverage level of UE 405A may be expressed with respect to other cells, such as, for example, first cell 415B or neighbor cell 415C. Examples of signal quality include, but are not limited to, Signal to Noise Ratio (SNR), SINR, CQI, RSRQ, CRS $\hat{E}s/Iot$, Synchronization Channel (SCH) $\hat{E}s/Iot$ etc. Examples of signal strength include, but are not limited to, path loss, RSRP, SCH_RP etc. The notation $\hat{E}s/Iot$ is defined as ratio of Es, which is the received energy per resource element (RE) (power normalized to the subcarrier spacing) during the useful part of the symbol (i.e., excluding the cyclic prefix), at the antenna connector of UE 405A, to Iot, which is the received power spectral density of the total noise and interference for a certain RE (power integrated over the RE and normalized to the subcarrier spacing) as measured at the antenna connector of UE 405.

To illustrate, consider the following examples. According to a first example, 2 coverage levels may be defined with respect to signal quality (e.g., SNR) at UE 405A. In this example, coverage enhancement level 1 (CE1) has SNR $\geq$ -6 dB at UE 405A with respect to its serving cell 415A. Coverage enhancement level 2 (CE2) may have -12 dB $\leq$ SNR < -6 dB at UE 405 with respect to its serving cell 415A.

According to a second example, 4 coverage levels may be defined. In this second example, coverage enhancement level 1 (CE1) has SNR $\geq$ -6 dB at UE 405 with respect to its serving cell 415A. Coverage enhancement level 2 (CE2) has -12 dB $\leq$ SNR < -6 dB at UE 405 with respect to its serving cell 415A. Coverage enhancement level 3 (CE3) has -15 dB $\leq$ SNR < -12 dB at UE 405 with respect to its serving cell 415A. Coverage enhancement level 4 (CE4) has -18 dB $\leq$ SNR < -15 dB at UE 405 with respect to its serving cell 415A.

In the above example, CE1 may be interchangeably referred to as normal coverage level, baseline coverage level, reference coverage level, legacy coverage level, etc. On the other hand, CE2-CE4 may be referred to as enhanced coverage or extended coverage levels.

UE 405A may obtain information on the coverage enhancement level of the node with respect to a cell, such as first cell 415B, in any suitable manner. As one example, in certain embodiments UE 405A may perform one or more radio measurements with respect to first cell 415B, and determine the coverage enhancement level of UE 405A with respect to first cell 415B based on the one or more radio measurements performed with respect to first cell 415B. For example, UE 405A may perform radio measurements (such as RSRP and/or RSRQ and/or SINR or SNR) with respect to first cell 415B and determine its coverage in the target area associated with network node 415B. As another example, UE 405A may perform one or more radio measurements (such as RSRP and/or RSRQ and/or SINR or SNR) with respect to serving cell 415A and determine the coverage enhancement level of UE 405A with respect to first cell 415B based on the one or more radio measurements performed with respect to serving cell 415A. As still another example, UE 405A may perform one or more radio measurements (such as RSRP and/or RSRQ and/or SINR or SNR) with respect to a neighbor cell, such as cell 415C, and determine the coverage enhancement level of UE 405A with respect to first cell 415B based on the one or more radio measurements performed with respect to neighbor cell 415C. UE 405A may further use the determined coverage enhancement level in addition to other obtained information, such as one or more of the operation modes supported by UE 405A and in first cell 415A, for selecting the measurement procedure.

When coverage enhancements are supported, typically most channels (both UL and DL) are repeated. This means the reference signals or synchronization signals used for measurements are also repeated. In certain embodiments, UE 405A may monitor one or more transmitted reference signals, and determine a signal transmission pattern for first cell 415B based on the one or more transmitted reference signals. After monitoring the transmitted reference signals, UE 405A could select (i.e., adapt) the measurement procedure from the plurality of possible measurement procedures based on the determined signal transmission pattern for first cell 415B, and perform one or more measurements accordingly.

As noted above, UE 405A may select (i.e., adapt) the measurement procedure from the plurality of possible measurement procedures also based on the obtained information on the coverage enhancement level of UE 405A with respect to first cell 415B. In other words, UE 405A may select between different measurement procedures depending on both the operational modes used in the cell to be measured and also the coverage enhancement level of UE 405A with respect to that cell. As described above, the aim of the adaptation of the measurement procedure is to meet one or more pre-defined measurement requirements. To illustrate, consider the following examples.

According to a first example, if UE 405A identifies that the operational mode is in-band, and UE 405A is operating under normal coverage in the cell to be measured, then UE 405A may select a first measurement procedure to use to perform one or more measurements. One or more parameters of the selected first measurement procedure may be adapted to the operational mode and coverage level identified by UE 405A. For example, the one or more measurement parameters of the first measurement procedure may comprise, for example, a first set of measurement sampling frequency/rate, a first length of measurement samples in time and/or frequency, a first measurement period, etc.

On the other hand, according to a second example, if UE 405A identifies that the operational mode used in a cell to be measured is in-band, and UE 405A is operating under extended coverage, then UE 405A may select a second measurement procedure to use to perform one or more measurements. One or more parameters of the selected second measurement procedure may be adapted to the operational mode and coverage level identified by UE 405A. For example, the one or more parameters of the second measurement procedure, in comparison to the first measurement procedure described above, may require more processing in UE 405A. For example, the one or more parameters of the second measurement procedure may include a longer measurement period to use for performing one or more measurements. As another example, sampling could also be performed more frequently according to the selected second measurement procedure. This is because UE 405A will have to perform measurements in more stringent conditions (e.g., where SINR of the cell is below a threshold (e.g., -12 dB)).

The selection of the measurement procedure based on operational mode and on signal transmission configuration (e.g., coverage enhancement level) could be as shown below in Table 1. In Table 1, an example of 3 different levels of coverage enhancement is used. The values for measurement accuracy and sampling frequency shown in Table 1 are for purposes of example only. The present disclosure is not limited to the examples in Table 1 below. Rather, the present disclosure contemplates that the measurement accuracy and sampling frequency can be different than those in Table 1. In certain embodiments, UE 405A could obtain such configuration directly from a network node, such as one or more of network nodes 410A-C, or any other nodes in the network (e.g., another UE, such as UE 405B). Thus, in some cases it may be possible to receive such configurations directly from other UE/devices (e.g., ProSe device).

**Table 1: Example of measurement procedure configuration based on operational mode and signal transmission configurations (e.g. coverage enhancement level)**

| Operational mode | Measurement period | Measurement accuracy | Sampling frequency |
|---|---|---|---|
| Stand-alone | CE1 | +/-4.5dB | Every 40 ms |
| | CE2 | +/ 7dB | Every 80 ms |
| | CE3 | +/- 8 dB | Every 80 ms |
| Guard-band | CE1 | +/-4.5dB | Every 40 ms |
| | CE2 | +/ 7dB | Every 80 ms |
| | CE3 | +/- 8 dB | Every 80 ms |
| In-band | CE1 | +/-4.5dB | Every 40 ms |
| | CE2 | +/ 7dB | Every 80 ms |
| | CE3 | +/- 8 dB | Every 80 ms |

There may be significant benefits to adapting the measurement procedures based on obtained information related to at least the operational mode of the cell to be measured. As an example, if it is an operational mode with dense reference signals, then a shorter measurement period can be used. This means that the power consumption can be reduced. Instead of having a common measurement procedure with one set of measurement parameters to perform measurement on all types of operational modes, UE 405A adapts the measurement procedure based on obtained information (such as the operational mode and coverage enhancement levels), which will bring significant benefits for the network. In addition, as a consequence of adapting the measurement procedure/configuration based on operational modes, different requirements may apply. The requirements will depend on the operational mode of the cell on which the measurement is performed.

In addition to adapting the measurement procedure/configuration based on operational mode and other signal transmission configurations, similar adaptations can also be made on the UL. For example, if obtained information shows that UE 405A is operating on an in-band carrier that might be subject to output power limitation, UE 405A may, for example, adapt some of its UL reference signals. For example, UE 405A may use more resource elements, or another robust transmission format, etc.

In certain embodiments, a node (such as UE 405A or network node 410A) may signal information about one or more measurement procedures to other nodes (e.g., another UE 405 or network node 410). For example, UE 405A may transmit information about the selected measurement procedure to another node. The information may be signaled in any suitable manner. For example, in certain embodiments a node may transmit or signal the information to other nodes. The information may be related to the measurement procedure used (or expected to be used by UE 405A) based on at least the operational mode of the measured cell. Examples of other nodes that may receive the information include, but are not limited to, a radio network node (e.g., eNode B, base station, access point, etc), ProSe UEs, ProSe relay UE, core network nodes, positioning node or any other node used for dedicated services such as self-organizing network (SON) node. The other nodes may also be the receiving node.

There may be significant benefits to sharing the derived measurement configuration with other nodes. For example, in certain embodiments the same or partial information may be applicable to other nodes in the network, and in that case it can be reused. This way, the measurements can be improved in large scale. As another example, deriving the measurement configuration, which can be quite complex sometimes, can be done in one place and only once, and then signaled to other nodes in the network. This may advantageously reduce processing in the different nodes in the network.

The network node 410 receiving this information may also adapt the parameters that are signaled by network node 410 to a UE 405 as part of the measurement configuration. For example, a network node 410 may configure a UE 405 with a larger value of the time domain filtering coefficient in case UE 405 often measures neighbor cells with in-band or guard band modes. Longer filtering coefficient will enable longer measurement time. This in turn will allow UE 405 to perform measurements on the cells with better accuracy (e.g., UE 405 may measure RSRP with +/- 1 dB accuracy instead of +/- 2 dB accuracy when filtering time is equal to or above a threshold (e.g. 400 ms)).

Although certain example embodiments may be described in terms of NB-IOT devices, the present disclosure is not limited to the example embodiments. Rather, the present disclosure contemplates that the various embodiments described herein may be applicable to any RAT or multi-RAT systems, where the candidate cells evaluated for mobility belong to different deployment types. Similarly, although certain example embodiments may be described using UE 405A as an example, this is for purposes of illustration only. The present disclosure contemplates that the various embodiments described herein may be applied to any suitable network entity (e.g., UEs 405 and network nodes 410). Furthermore, in the above examples the use of cell 415B associated with network node 415B as the cell to be measured is for purposes of example and illustration only. The present disclosure is not limited to such an example embodiment, and contemplates that the various embodiments described herein may be applicable to any suitable cells in any suitable network configurations.

To further illustrate a particular application of the various embodiments described herein, consider the following description related to cell reselection. RAN4 has started high-level discussions on RRM requirements for NB-IoT. Some high-level agreements were made during the RAN4 meetings, as described in R4-158205, "NB-IoT Way forward for RRM," including agreements for UEs 405 in RRC IDLE and CONNECTED state were captured. It was agreed that, with respect to UE measurements in RRC_IDLE state, the following requirements need to be specified: cell selection; cell detection and cell reselection delays, which may include cell detection time and reselection evaluation time; measurement rate/delay for cell detection and cell reselection; measurement accuracy(ies) of measurement(s) used for cell detection and cell reselection are for further study; and prioritize work on the above requirements for intra-frequency carrier in Release 13.

In some cases, the measurements described above will be used for cell reselection procedure in RRC_IDLE state. The existing cell reselection procedure is defined in section 4.2 in 3GPP TS 36.133 v8.3.0, "Requirements for support of radio resource management." The cell reselection procedure includes UE 405A performing RSRP and RSRQ measurements of the serving cell 415A and uses it to evaluate the cell selection criterion S. The requirements also specify how many measurements UE 405A is allowed to use for filtering and how much they shall be spaced apart in time. In addition to serving cell measurement, UE 405A is also required to perform RSRP and RSRQ measurements on neighbor cells, such as cells 415B or 415C, if the S-criterion cannot be fulfilled.

The existing cell reselection procedure may not work very well for the NB-IoT since, as described above, UE bandwidth is reduced to 1 PRB only. In practice, this means that the number of resource elements available for measurement is significantly reduced, and that will affect the measurement accuracy as well as the measurement time/rate. Thus, an important consideration is how bad the measurement performance using the legacy cell specific reference symbols, CRS, is for NB-IoT (i.e., whether legacy type measurement is sufficient). It is likely that the large inaccuracy in measurement may not guarantee acceptable cell reselection measurement performance. As described above, this is indicative of the need for improved measurement procedures in NB-IoT. may include measurements using synchronization signals.

The various embodiments described above provide an option to improve RSRP/RSRQ measurement. Different design options for synchronization signals have been considered. One option is to use the synchronization signals (e.g., PSS, SSS) for measurement to evaluate the downlink quality of serving cell 410A and neighbor cells (e.g., cells 410B and 410C), instead of CRS. The problem of using CRS, as described above, is that the number of resource elements that contain reference symbols may not be sufficient to estimate the channel and perform measurement in a wide range of radio channels (e.g., multipath fading, shorter coherence bandwidth, etc.) also under extended coverage.

New design options for synchronization signals take into account the NB-IoT deployment modes. As described above, these include stand-alone operation, guard-band operation, and in-band operation. For deployment modes that are more challenging than others (e.g., in-band deployment), different repetition intervals for synchronization signals are considered. The repetitions are used to support UEs 405 operating under extreme coverage. This means that the density of synchronization signals will depend on the deployment mode. From a measurement perspective, this means the number of resource elements available for measurement will depend on deployment scenario (i.e., mode of operation). This would mean that the measurement periods and/or accuracies for the same type of measurement will depend upon the operational mode. For example, a shorter measurement period could be required for stand-alone operation, a longer measurement period could be required for in-band operation, and the longest measurement period could be required for guard-band operation. Thus, there is a need for the measurement performance of each deployment mode to be studied independently and the requirements defined accordingly. For example, it may be desirable to study cell reselection criteria based on measurement using synchronization signals for NB-IoT. In particular, the measurement performance using synchronization signals should be studied separately for different deployment modes. In addition, it may be desirable to study RRM measurement performance for each deployment mode independently, and the corresponding requirements should be defined accordingly for NB-IoT UEs in RRC_IDLE state. In addition to measuring on synchronization signals, measurement performance using both synchronization signals and legacy CRS signals could be evaluated.

Another consideration is the impact of deployment modes on cell reselection criteria. In an example scenario, assume that UE 405A is deployed for NB-IoT operation within a wider LTE bandwidth (i.e., in-band operation). UE 405A identifies new neighbor cells 415B and 415C and performs one or more measurements on them. The one or more measurements are later used for evaluation of the cells for cell selection/reselection. The measured cells could be deployed in a stand-alone fashion or within a LTE guard-band. In such a case, one consideration is how these neighbor cells are evaluated for mobility. One option is to evaluate them equally regardless of how the neighbor cells are deployed. Another is to consider an offset.

In the legacy LTE system, cell reselection is based on S-criterion defined in TS 36.304 v8.2.0 as shown below. It is based on measured cell RX level value, and measured cell quality value as expressed below:

$$\mathrm{Srxlev} > 0 \ \ \mathrm{AND} \ \ \mathrm{Squal} > 0$$

where:

$$\mathrm{Srxlev} = \mathrm{Q_{rxlevmeas}} - (\mathrm{Q_{rxlevmin}} + \mathrm{Q_{rxlevminoffset}}) - \mathrm{Pcompensation} - \mathrm{Qoffset_{temp}}$$

$$\mathrm{Squal} = \mathrm{Q_{qualmeas}} - (\mathrm{Q_{qualmin}} + \mathrm{Q_{qualminoffset}}) - \mathrm{Qoffset_{temp}}$$

The cells evaluated for cell change (e.g., cell selection, cell reselection, handover, RRC reestablishment) belong to the same or different carriers. The cell change could be between two cells of same RAT or different RAT.

As described above, compared to the legacy LTE operation, NB-IoT supports different types of deployments. The NB-IoT could be deployed as: stand-alone operation; operation in LTE guard-band; and operation within wider LTE carrier bandwidth (i.e., in-band operation). For example a UE 405 capable of multiple deployment modes may have to reselect a target operating with a NB-IOT different than that used by current serving cell 415A. When evaluating the possible cells for mobility, the deployment type of the serving and target cells may impact the cell reselection performance.

Therefore an important consideration is the impact of the deployment type on cell reselection in NB-IoT. This was not necessary for legacy network because there is mainly one type of deployment that is supported. But this is not the case for NB-IoT.

The possible reselection cases for NB-IoT are shown in Table 2 below. It is possible that the current serving cell and target cell may have different modes in the current serving cell and target cell. Thus, the impact of NB-IoT deployment modes on cell reselection in addition to the S-criterion based on signal strength and quality is an important consideration.

**Table 2: Possible reselection cases for NB-IoT UE**

| | Target cell for cell reselection | | |
|---|---|---|---|
| **Current serving cell** | **Stand-alone cell** | **Guard-band cell** | **In-band cell** |
| Stand-alone cell | Y/N? | Y/N? | Y/N? |
| Guard-band cell | Y/N? | Y/N? | Y/N? |
| In-band cell | Y/N? | Y/N? | Y/N? |

Another consideration is the impact of deployment type of serving cell 415A and target cells (e.g., neighbor cells 415B and 415C) on the cell reselection procedure/requirements for NB-IoT UEs in RRC IDLE state.

In certain embodiments, UE 405A may obtain information regarding an operational mode to be used by UE 405A after a cell-change procedure. UE 405A may obtain the information regarding the operational mode to be used by UE 405A after the cell-change procedure in any suitable manner. As one example, UE 405A may obtain pre-defined information regarding the operational mode of UE 405A after the cell-change procedure. The pre-defined information may, for example, relate to a relation between the mode used in current serving cell 415A and the modes allowed in the target cell (i.e., in the new serving cell after the cell change, such as one of cells 415B or 415C). As another example, UE 405A may obtain this information by autonomously determining the operational mode of UE 405A after the cell-change procedure. As another example, UE 405A may obtain this information by receiving the information regarding the operational mode of UE 405A after the cell-change procedure. UE 405A may receive the information from any suitable source. For example, UE 405A may receive the information from a network node, such as one or more of network nodes 410A-C.

In certain embodiments, UE 405A may obtain information related to one or more configuration parameters. UE 405A may obtain the information related to the one or more configuration parameters in any suitable manner. For example, UE 405A may obtain or receive the configuration parameters from a network node, such as one or more of network nodes 405A-C. The configuration parameters may comprise any suitable information. Examples of the configuration parameters include, but are not limited to, a carrier frequency of one or more cells, a time domain filtering coefficient, a hysteresis parameter, a cell change offset or margin, a measurement bandwidth, a type of measurement to be performed, and any other suitable information. These measurement configuration parameters may be in addition to the information about the operational modes used by UE 405A for performing cell change procedure. UE 405A may perform the cell-change procedure using the obtained information related to the one or more configuration parameters.

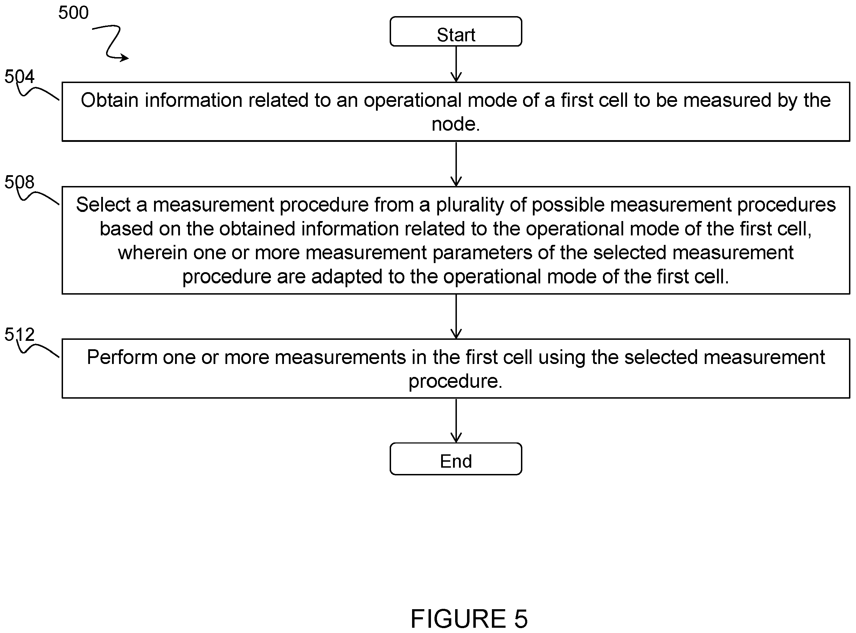

FIGURE 5 is a flow diagram of a method in a node, in accordance with certain embodiments. The method begins at step 504, where the node obtains information related to an operational mode of a first cell to be measured by the node. In certain embodiments, the node may comprise one of a wireless device and a network node. The operational mode of the first cell may comprise one of: an in-band mode; a stand-alone mode; and a guard-band mode.

Obtaining information related to the operational mode of the first cell may comprise one or more of: obtaining historical data or statistics that relates a cell ID of the first cell and one or more operational modes supported by the first cell; receiving information from a serving cell of the node about the operational mode of the first cell; reading system information of the first cell, the system information indicating the operational mode of the first cell; and estimating interference or interference statistics received from the first cell, wherein the estimated interference or interference statistics provide an indication of the operational mode of the first cell. The one or more measurement parameters of the selected measurement procedure may comprise one or more of: a measurement time; a measurement reporting time or delay; a measurement accuracy; a number of cells to be measured over the measurement time; a cell selection delay; a cell reselection delay; and a measurement rate for one or more of cell selection and cell reselection.

In certain embodiments, the method may comprise obtaining information on a coverage enhancement level of the node with respect to the first cell. In some cases, obtaining information on the coverage enhancement level of the node with respect to the first cell may comprise: performing one or more radio measurements with respect to the first cell; and determining the coverage enhancement level of the node with respect to the first cell based on the one or more radio measurements performed with respect to the first cell. In some cases, obtaining information on the coverage enhancement level of the node with respect to the first cell may comprise: performing one or more radio measurements with respect to a serving cell of the node; and determining the coverage enhancement level of the node with respect to the first cell based on the one or more radio measurements performed with respect to the serving cell. In some cases, obtaining information on a coverage enhancement level of the node with respect to the first cell may comprise: performing one or more radio measurements with respect to a neighbor cell; and determining the coverage enhancement level of the node with respect to the first cell based on the one or more radio measurements performed with respect to the neighbor cell.

At step 508, the node selects a measurement procedure from a plurality of possible measurement procedures based on the obtained information related to the operational mode of the first cell, wherein one or more measurement parameters of the selected measurement procedure are adapted to the operational mode of the first cell. In certain embodiments, selecting the measurement procedure from the plurality of possible measurement procedures may also be based on the obtained information on the coverage enhancement level of the node with respect to the first cell. In certain embodiments, the method may comprise: monitoring one or more transmitted reference signals; determining a signal transmission pattern for the first cell based on the one or more transmitted reference signals; and selecting the measurement procedure from the plurality of possible measurement procedures may be further based on the determined signal transmission pattern for the first cell.

In certain embodiments, the method may comprise obtaining information related to an operational mode of a second cell to be measured by the node, wherein selecting the measurement procedure from the plurality of possible measurement procedures is further based on the operational mode of the second cell. In certain embodiments, the method may comprise determining one or more operational modes supported by the node, wherein selecting the measurement procedure from the plurality of possible measurement procedures may be further based on the determined one or more operational modes supported by the node.

At step 512, the node performs one or more measurements in the first cell using the selected measurement procedure. In certain embodiments, the method may comprise transmitting information about the selected measurement procedure to another node.

In certain embodiments, the method may comprise obtaining information regarding an operational mode to be used by the node after a cell change procedure. Obtaining the information regarding the operational mode to be used by the node after the cell change procedure may comprise one or more of: obtaining pre-defined information regarding the operational mode of the node after a cell change procedure; autonomously determining the operational mode of the node after the cell change procedure; and receiving the information regarding the operational mode of the node after the cell change procedure. The method may comprise obtaining information related to one or more configuration parameters; and performing the cell change procedure using the obtained information related to the one or more configuration parameters. The one or more configuration parameters may comprise one or more of: a carrier frequency; a time domain filtering coefficient; a hysteresis parameter; a cell change offset or margin; a measurement bandwidth; and a type of measurement to be performed.

FIGURE 6 is a block schematic of an exemplary wireless device, in accordance with certain embodiments. Wireless device 405 may refer to any type of wireless device communicating with a node and/or with another wireless device in a cellular or mobile communication system. Examples of wireless device 405 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 405 may also be referred to as UE, a station (STA), a device, or a terminal in some embodiments. Wireless device 405 includes transceiver 610, processor 620, and memory 630. In some embodiments, transceiver 610 facilitates transmitting wireless signals to and receiving wireless signals from network node 410 (e.g., via antenna 640), processor 620 executes instructions to provide some or all of the functionality described above as being provided by wireless device 405, and memory 630 stores the instructions executed by processor 620.

Processor 620 may include any suitable combination of hardware and software implemented in one or more modules to execute instructions and manipulate data to perform some or all of the described functions of wireless device 405, such as the functions of wireless device 405 described above in relation to FIGURES 1-5. In some embodiments, processor 620 may include, for example, one or more computers, one or more central processing units (CPUs), one or more microprocessors, one or more applications, one or more application specific integrated circuits (ASICs), one or more field programmable gate arrays (FPGAs) and/or other logic.

Memory 630 is generally operable to store instructions, such as a computer program, software, an application including one or more of logic, rules, algorithms, code, tables, etc. and/or other instructions capable of being executed by a processor. Examples of memory 630 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by processor 620.

Other embodiments of wireless device 405 may include additional components beyond those shown in FIGURE 6 that may be responsible for providing certain aspects of the wireless device's functionality, including any of the functionality described above and/or any additional functionality (including any functionality necessary to support the solution described above). As just one example, wireless device 405 may include input devices and circuits, output devices, and one or more synchronization units or circuits, which may be part of the processor 620. Input devices include mechanisms for entry of data into wireless device 405. For example, input devices may include input mechanisms, such as a microphone, input elements, a display, etc. Output devices may include mechanisms for outputting data in audio, video and/or hard copy format. For example, output devices may include a speaker, a display, etc.

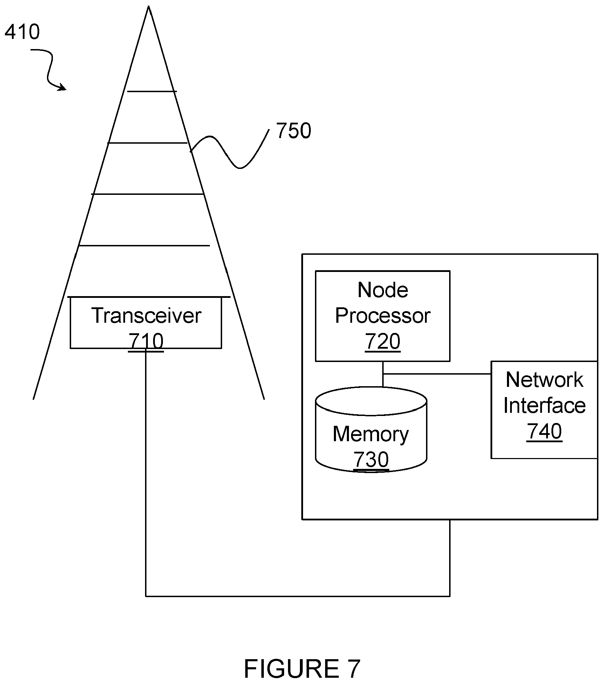

FIGURE 7 is a block schematic of an exemplary network node, in accordance with certain embodiments. Network node 410 may be any type of radio network node or any network node that communicates with a UE and/or with another network node. Examples of network node 410 include an eNodeB, a node B, a base station, a wireless access point (e.g., a Wi-Fi access point), a low power node, a base transceiver station (BTS), relay, donor node controlling relay, transmission points, transmission nodes, remote RF unit (RRU), remote radio head (RRH), multi-standard radio (MSR) radio node such as MSR BS, nodes in distributed antenna system (DAS), O&M, OSS, SON, positioning node (e.g., E-SMLC), MDT, or any other suitable network node. Network nodes 410 may be deployed throughout network 400 as a homogenous deployment, heterogeneous deployment, or mixed deployment. A homogeneous deployment may generally describe a deployment made up of the same (or similar) type of network nodes 410 and/or similar coverage and cell sizes and inter-site distances. A heterogeneous deployment may generally describe deployments using a variety of types of network nodes 410 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 410 may include one or more of transceiver 710, processor 720, memory 730, and network interface 740. In some embodiments, transceiver 710 facilitates transmitting wireless signals to and receiving wireless signals from wireless device 405 (e.g., via antenna 750), processor 720 executes instructions to provide some or all of the functionality described above as being provided by a network node 410, memory 730 stores the instructions executed by processor 720, and network interface 740 communicates signals to backend network components, such as a gateway, switch, router, Internet, Public Switched Telephone Network (PSTN), core network nodes or radio network controllers 130, etc.

Processor 720 may include any suitable combination of hardware and software implemented in one or more modules to execute instructions and manipulate data to perform some or all of the described functions of network node 410, such as those described above in relation to FIGURES 1-5 above. In some embodiments, processor 720 may include, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processor 720 and may refer to any suitable device operable to receive input for network node 410, send output from network node 410, perform suitable processing of the input or output or both, communicate to other devices, or any combination of the preceding. Network interface 740 may include appropriate hardware (e.g., port, modem, network interface card, etc.) and software, including protocol conversion and data processing capabilities, to communicate through a network.

Other embodiments of network node 410 may include additional components beyond those shown in FIGURE 7 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

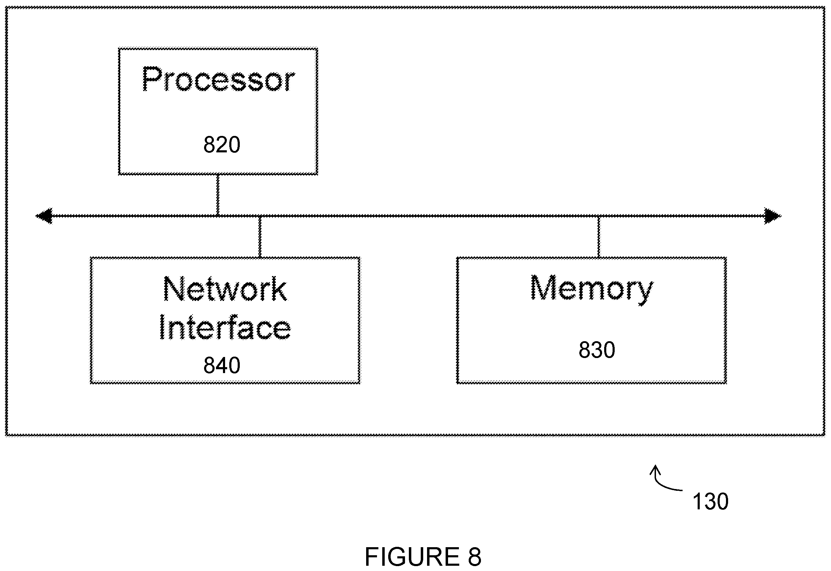

FIGURE 8 is a block schematic of an exemplary radio network controller or core network node 130, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 130 includes processor 820, memory 830, and network interface 840. In some embodiments, processor 820 executes instructions to provide some or all of the functionality described above as being provided by the network node, memory 830 stores the instructions executed by processor 820, and network interface 840 communicates signals to any suitable node, such as a gateway, switch, router, Internet, Public Switched Telephone Network (PSTN), network nodes 410, radio network controllers or core network nodes 130, etc.

Processor 820 may include any suitable combination of hardware and software implemented in one or more modules to execute instructions and manipulate data to perform some or all of the described functions of the radio network controller or core network node 130. In some embodiments, processor 820 may include, for example, one or more computers, one or more central processing units (CPUs), one or more microprocessors, one or more applications, and/or other logic.

Memory 830 is generally operable to store instructions, such as a computer program, software, an application including one or more of logic, rules, algorithms, code, tables, etc. and/or other instructions capable of being executed by a processor. Examples of memory 830 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 840 is communicatively coupled to processor 820 and may refer to any suitable device operable to receive input for the network node, send output from the network node, perform suitable processing of the input or output or both, communicate to other devices, or any combination of the preceding. Network interface 840 may include appropriate hardware (e.g., port, modem, network interface card, etc.) and software, including protocol conversion and data processing capabilities, to communicate through a network.

Other embodiments of the network node may include additional components beyond those shown in FIGURE 8 that may be responsible for providing certain aspects of the network node's functionality, including any of the functionality described above and/or any additional functionality (including any functionality necessary to support the solution described above).

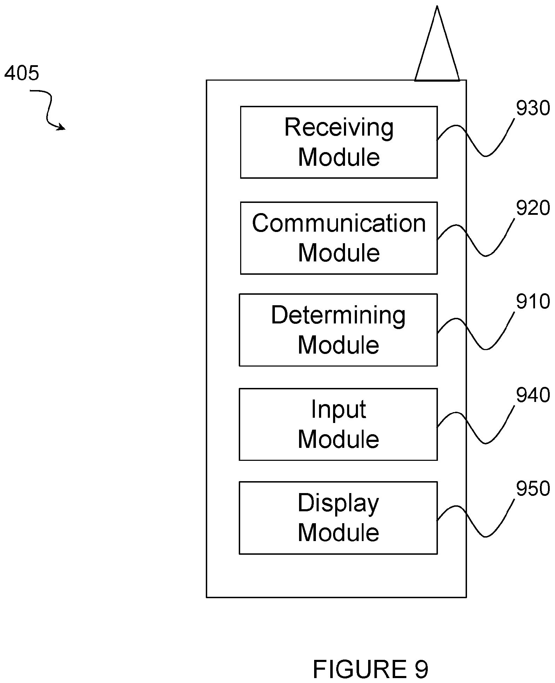

FIGURE 9 is a block schematic of an exemplary wireless device, in accordance with certain embodiments. Wireless device 405 may include one or more modules. For example, wireless device 405 may include a determining module 910, a communication module 1320, a receiving module 930, an input module 940, a display module 950, and any other suitable modules. Wireless device 405 may perform the methods for adapting a measurement procedure of NB-IOT described above with respect to FIGURES 1-5.

Determining module 910 may perform the processing functions of wireless device 405. In certain embodiments, wireless device 405 may perform the functions of the node described herein. For example, determining module 910 may obtain information related to an operational mode of a first cell to be measured by the node. As another example, determining module 910 may select a measurement procedure from a plurality of possible measurement procedures based on the obtained information related to the operational mode of the first cell, wherein one or more measurement parameters of the selected measurement procedure are adapted to the operational mode of the first cell. As still another example, determining module 910 may perform one or more measurements in the first cell using the selected measurement procedure. As yet another example, determining module 910 may obtain information on a coverage level of the node with respect to the first cell, and select the measurement procedure from the plurality of possible measurement procedures based on the obtained information on the coverage enhancement level of the node with respect to the first cell. As yet another example, determining module 910 may obtain information related to an operational mode of a second cell to be measured by the node, and select the measurement procedure from the plurality of possible measurement procedures based on the operational mode of the second cell. As another example, determining module 910 may obtain information regarding an operational mode to be used by the node after a cell change procedure. As another example, determining module 910 may obtain information related to one or more configuration parameters, and perform the cell change procedure using the obtained information related to the one or more configuration parameters. As still another example, determining module 910 may monitor one or more transmitted reference signals, determine a signal transmission pattern for the first cell based on the one or more transmitted reference signals, and select the measurement procedure from the plurality of possible measurement procedures based on the determined signal transmission pattern for the first cell. As yet another example, determining module 910 may determine one or more operational modes supported by the node, and select the measurement procedure from the plurality of possible measurement procedures based on the determined one or more operational modes supported by the node.

Determining module 910 may include or be included in one or more processors, such as processor 620 described above in relation to FIGURE 6. Determining module 910 may include analog and/or digital circuitry configured to perform any of the functions of determining module 910 and/or processor 620 described above. The functions of determining module 910 described above may, in certain embodiments, be performed in one or more distinct modules.

Communication module 920 may perform the transmission functions of wireless device 405. In certain embodiments, wireless device 405 may perform the operations of the node described herein. For example, communication module 920 may transmit information about the selected measurement procedure to another node. Communication module 920 may transmit messages to one or more of network nodes 410 of network 400. Communication module 920 may include a transmitter and/or a transceiver, such as transceiver 610 described above in relation to FIGURE 6.

Communication module 920 may include circuitry configured to wirelessly transmit messages and/or signals. In particular embodiments, communication module 920 may receive messages and/or signals for transmission from determining module 910. In certain embodiments, the functions of communication module 920 described above may be performed in one or more distinct modules.

Receiving module 930 may perform the receiving functions of wireless device 405. In certain embodiments, wireless device 405 may perform the functions of the node described herein. For example, receiving module 930 may obtain information related to an operational mode of a first cell to be measured by the node. As another example, receiving module 930 may obtain information on a coverage level of the node with respect to the first cell. As still another example, receiving module 930 may obtain information related to an operational mode of a second cell to be measured by the node. As still another example, receiving module 930 may obtain information regarding an operational mode to be used by the node after a cell change procedure. As yet another example, receiving module 930 may obtain information related to one or more configuration parameters. As another example, receiving module 930 may obtain information related to an operational mode of a first cell to be measured by the node.

Receiving module 930 may include a receiver and/or a transceiver, such as transceiver 610 described above in relation to FIGURE 6. Receiving module 930 may include circuitry configured to wirelessly receive messages and/or signals. In particular embodiments, receiving module 930 may communicate received messages and/or signals to determining module 910.

Input module 940 may receive user input intended for wireless device 405. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to determining module 910.

Display module 950 may present signals on a display of wireless device 405. Display module 950 may include the display and/or any appropriate circuitry and hardware configured to present signals on the display. Display module 950 may receive signals to present on the display from determining module 910.

Determining module 910, communication module 920, receiving module 930, input module 940, and display module 950 may include any suitable configuration of hardware and/or software. Wireless device 405 may include additional modules beyond those shown in FIGURE 9 that may be responsible for providing any suitable functionality, including any of the functionality described above and/or any additional functionality (including any functionality necessary to support the various solutions described herein).

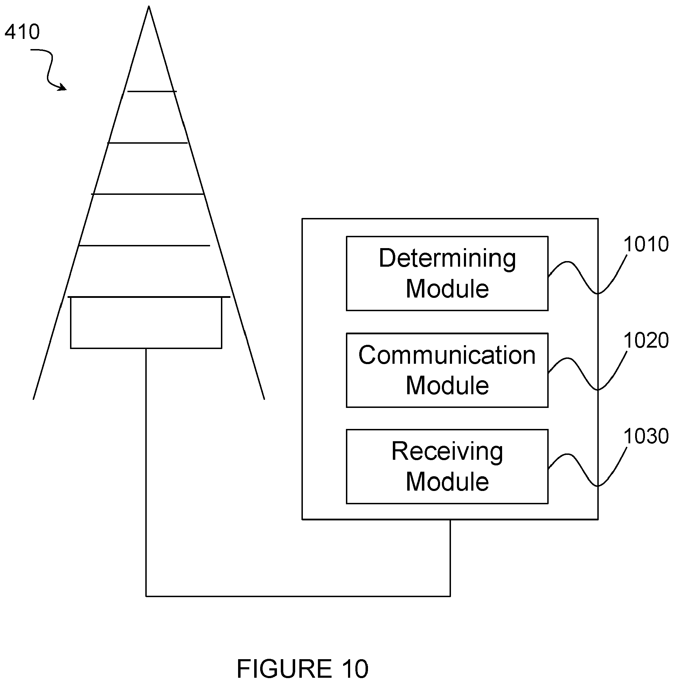

FIGURE 10 is a block schematic of an exemplary network node 410, in accordance with certain embodiments. Network node 410 may include one or more modules. For example, network node 410 may include determining module 1010, communication module 1020, receiving module 1030, and any other suitable modules. In some embodiments, one or more of determining module 1010, communication module 1020, receiving module 1030, or any other suitable module may be implemented using one or more processors, such as processor 720 described above in relation to FIGURE 7. In certain embodiments, the functions of two or more of the various modules may be combined into a single module. Network node 410 may perform the methods for adapting a measurement procedure of NB-IOT described above with respect to FIGURES 1-5.

Determining module 1010 may perform the processing functions of network node 410. In certain embodiments, network node 410 may perform the functions of the node described herein. For example, determining module 1010 may obtain information related to an operational mode of a first cell to be measured by the node. As another example, determining module 1010 may select a measurement procedure from a plurality of possible measurement procedures based on the obtained information related to the operational mode of the first cell, wherein one or more measurement parameters of the selected measurement procedure are adapted to the operational mode of the first cell. As still another example, determining module 1010 may perform one or more measurements in the first cell using the selected measurement procedure. As yet another example, determining module 1010 may obtain information on a coverage level of the node with respect to the first cell, and select the measurement procedure from the plurality of possible measurement procedures based on the obtained information on the coverage enhancement level of the node with respect to the first cell. As yet another example, determining module 1010 may obtain information related to an operational mode of a second cell to be measured by the node, and select the measurement procedure from the plurality of possible measurement procedures based on the operational mode of the second cell. As another example, determining module 1010 may obtain information regarding an operational mode to be used by the node after a cell change procedure. As another example, determining module 1010 may obtain information related to one or more configuration parameters, and perform the cell change procedure using the obtained information related to the one or more configuration parameters. As still another example, determining module 1010 may monitor one or more transmitted reference signals, determine a signal transmission pattern for the first cell based on the one or more transmitted reference signals, and select the measurement procedure from the plurality of possible measurement procedures based on the determined signal transmission pattern for the first cell. As yet another example, determining module 1010 may determine one or more operational modes supported by the node, and select the measurement procedure from the plurality of possible measurement procedures based on the determined one or more operational modes supported by the node.

Determining module 1010 may include or be included in one or more processors, such as processor 720 described above in relation to FIGURE 7. Determining module 1010 may include analog and/or digital circuitry configured to perform any of the functions of determining module 1010 and/or processor 720 described above. The functions of determining module 1010 may, in certain embodiments, be performed in one or more distinct modules. For example, in certain embodiments some of the functionality of determining module 1010 may be performed by an allocation module.

Communication module 1020 may perform the transmission functions of network node 410. In certain embodiments, network node 410 may perform the functions of the node described herein. For example, communication module 1020 may transmit information about the selected measurement procedure to another node. Communication module 1020 may transmit messages to one or more of wireless devices 405. Communication module 1020 may include a transmitter and/or a transceiver, such as transceiver 710 described above in relation to FIGURE 7. Communication module 1020 may include circuitry configured to wirelessly transmit messages and/or signals. In particular embodiments, communication module 1020 may receive messages and/or signals for transmission from determining module 1010 or any other module.

Receiving module 1030 may perform the receiving functions of network node 410. In certain embodiments, network node 410 may perform the functions of the node described herein. For example, receiving module 1030 may obtain information related to an operational mode of a first cell to be measured by the node. As another example, receiving module 1030 may obtain information on a coverage level of the node with respect to the first cell. As still another example, receiving module 1030 may obtain information related to an operational mode of a second cell to be measured by the node. As still another example, receiving module 1030 may obtain information regarding an operational mode to be used by the node after a cell change procedure. As yet another example, receiving module 930 may obtain information related to one or more configuration parameters. As another example, receiving module 1030 may obtain information related to an operational mode of a first cell to be measured by the node.

Receiving module 1030 may receive any suitable information from a wireless device. Receiving module 1030 may include a receiver and/or a transceiver, such as transceiver 710 described above in relation to FIGURE 7. Receiving module 1030 may include circuitry configured to wirelessly receive messages and/or signals. In particular embodiments, receiving module 1030 may communicate received messages and/or signals to determining module 1010 or any other suitable module.

Determining module 1010, communication module 1020, and receiving module 1030 may include any suitable configuration of hardware and/or software. Network node 410 may include additional modules beyond those shown in FIGURE 10 that may be responsible for providing any suitable functionality, including any of the functionality described above and/or any additional functionality (including any functionality necessary to support the various solutions described herein).

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

Abbreviations used in the preceding description include:

| | |
|---|---|
| AP | Access Point |
| ANR | Automatic Neighbor Relation |
| ARFCN | Absolute Radio Frequency Channel Number |
| BS | Base Station |
| BSC | Base Station Controller |
| BTS | Base Transceiver Station |
| CDM | Code Division Multiplexing |
| CGI | Cell Global ID |
| CPE | Customer Premises Equipment |
| CQI | Channel Quality Indicator |

| CRS | Cell-Specific Reference Signal |
|---|---|
| CSI | Channel State Information |
| CSI-RS | Channel State Information Reference Signals |
| D2D | Device-to-device |
| DAS | Distributed Antenna System |
| DL | Downlink |
| DMRS | Demodulation Reference Signals |
| DRX | Discontinuous Reception |
| E-CID | Enhanced CID |
| eNB | evolved Node B |
| EPDCCH | Enhanced Physical Downlink Control Channel |
| E-UTRA | Evolved-Universal Terrestrial Radio Access |
| FDD | Frequency Division Duplex |
| HO | Handover |
| IoT | Internet-of-Things |
| LAN | Local Area Network |
| LEE | Laptop Embedded Equipment |
| LME | Laptop Mounted Equipment |
| LTE | Long Term Evolution |
| M2M | Machine-to-Machine |
| MAN | Metropolitan Area Network |
| MCE | Multi-cell/multicast Coordination Entity |
| MDT | Minimization of Drive Tests |
| MSR | Multi-Standard Radio |
| MTC | Machine-Type Communication |
| NAS | Non-Access Stratum |
| NB | Narrowband |
| NB-IoT | Narrowband Internet-of-Things |
| NPSS | Narrowband Primary Synchronization Signal |
| NSSS | Narrowband Secondary Synchronization Signal |
| O&M | Operation and Maintenance |
| PCI | Physical Cell Identity |
| PDCCH | Physical Downlink Control Channel |
| PDSCH | Physical Downlink Shared Channel |
| PMI | Precoding Matrix Indicator |
| PSS | Primary Synchronization Signal |
| PSTN | Public Switched Telephone Network |
| PUSCH | Physical Uplink Shared Channel |
| PUCCH | Physical Uplink Control Channel |
| RAT | Radio Access Technology |
| RB | Resource Block |
| RF | Radio Frequency |
| RI | Rank Indicator |
| RLM | Radio Link Monitoring |
| RNC | Radio Network Controller |
| RRC | Radio Resource Control |
| RRH | Remote Radio Head |
| RRU | Remote Radio Unit |
| RSRP | Reference Signal Received Power |
| RSRQ | Reference Signal Received Quality |
| RSSI | Received Signal Strength Indicator |
| RSTD | Reference Signal Time Difference |
| RTT | Round-Trip Time |
| RX | Receive |
| SI | System Information |
| SINR | Signal-to-Interference plus Noise Ratio |
| SON | Self-Optimized Network |
| SSS | Secondary Synchronization Signal |

TDD        Time Division Duplex
TX         Transmit
UE         User Equipment
UL         Uplink
WAN        Wide Area Network


**Claims**

1.  A method in a Narrow Band Internet of Things, NB-IoT, node (405A, 410A), comprising:

    obtaining (504) information related to an operational mode of a first cell (415B) to be measured by the node, wherein the operational mode comprises one of an in-band mode, a stand-alone mode and a guard-band mode;
    selecting (508) a measurement procedure from a plurality of possible measurement procedures based on the obtained information related to the operational mode of the first cell, wherein one or more measurement parameters of the selected measurement procedure are adapted to the operational mode of the first cell;
    performing (512) one or more measurements in the first cell using the selected measurement procedure.

2.  The method of Claim 1, wherein obtaining information related to the operational mode of the first cell comprises one or more of:

    obtaining historical data or statistics that relates a cell ID of the first cell and one or more operational modes supported by the first cell;
    receiving information from a serving cell (415A) of the node about the operational mode of the first cell;
    reading system information of the first cell, the system information indicating the operational mode of the first cell;
    estimating interference or interference statistics received from the first cell, wherein the estimated interference or interference statistics provide an indication of the operational mode of the first cell.

3.  The method of Claim 1, wherein the one or more measurement parameters of the selected measurement procedure comprise one or more of:

    a measurement time;
    a measurement reporting time or delay;
    a measurement accuracy;
    a number of cells (415) to be measured over the measurement time;
    a cell selection delay;
    a cell reselection delay; and
    a measurement rate for one or more of cell selection and cell reselection.

4.  The method of Claim 1, comprising:
    obtaining information related to an operational mode of a second cell (415A, 415C) to be measured by the node, wherein selecting the measurement procedure from the plurality of possible measurement procedures is further based on the operational mode of the second cell.

5.  The method of Claim 1, comprising obtaining information regarding an operational mode to be used by the node after a cell change procedure, wherein obtaining the information regarding the operational mode to be used by the node after the cell change procedure comprises one or more of:

    obtaining pre-defined information regarding the operational mode of the node after a cell change procedure;
    autonomously determining the operational mode of the node after the cell change procedure; and
    receiving the information regarding the operational mode of the node after the cell change procedure.

6.  The method of Claim 5, comprising:

    obtaining information related to one or more configuration parameters; and
    performing the cell change procedure using the obtained information related to the one or more configuration parameters, wherein the one or more configuration parameters comprise one or more of:

a carrier frequency;
a time domain filtering coefficient;
a hysteresis parameter;
a cell change offset or margin;
a measurement bandwidth; and
a type of measurement to be performed.

7. The method of Claim 1, comprising obtaining information on a coverage enhancement level of the node with respect to the first cell.

8. The method of Claim 7, wherein obtaining information on the coverage enhancement level of the node with respect to the first cell comprises:

performing one or more radio measurements with respect to the first cell; and
determining the coverage enhancement level of the node with respect to the first cell based on the one or more radio measurements performed with respect to the first cell.

9. The method of Claim 7, wherein obtaining information on the coverage enhancement level of the node with respect to the first cell comprises:

performing one or more radio measurements with respect to a serving cell (415A) or a neighbor cell (415C) of the node; and
determining the coverage enhancement level of the node with respect to the first cell based on the one or more radio measurements performed with respect to the serving cell (415A) or neighbor cell (415C).

10. The method of Claim 7, wherein selecting the measurement procedure from the plurality of possible measurement procedures is also based on the obtained information on the coverage enhancement level of the node with respect to the first cell.

11. The method of Claim 7, comprising:

monitoring one or more transmitted reference signals;
determining a signal transmission pattern for the first cell based on the one or more transmitted reference signals; and
wherein selecting the measurement procedure from the plurality of possible measurement procedures is further based on the determined signal transmission pattern for the first cell.

12. The method of Claim 1, comprising determining one or more operational modes supported by the node, wherein selecting the measurement procedure from the plurality of possible measurement procedures is further based on the determined one or more operational modes supported by the node.

13. The method of any of Claims 1-12, comprising transmitting information about the selected measurement procedure to another node (410B, 410C).

14. The method of any of Claims 1-13, wherein the node comprises one of:

a wireless device (405A); and
a network node (410A).

15. A Narrow Band Internet of Things, NB-IoT, node (405A, 410A), comprising:
one or more processors (620, 720), the one or more processors configured to perform the method of any one of claims 1-14.

**Patentansprüche**

1. Verfahren in einem Knoten (405A, 410A) des Schmalband-Internets-der-Dinge, NB-IoT, umfassend:

Einholen (504) von Informationen in Bezug auf einen Betriebsmodus einer ersten Zelle (415B), die vom Knoten gemessen werden soll, wobei der Betriebsmodus einen von einem Inband-Modus, einem unabhängigen Modus und einem Schutzband-Modus umfasst;

Auswählen (508) einer Messprozedur aus einer Mehrzahl von möglichen Messprozeduren basierend auf den eingeholten Informationen in Bezug auf den Betriebsmodus der ersten Zelle, wobei ein oder mehrere Messparameter der ausgewählten Messprozedur an den Betriebsmodus der ersten Zelle angepasst werden;

Durchführen (512) einer oder mehrerer Messungen in der ersten Zelle unter Verwendung der ausgewählten Messprozedur.

2. Verfahren nach Anspruch 1, wobei das Einholen von Informationen in Bezug auf den Betriebsmodus der ersten Zelle eines oder mehreres umfasst von:

Einholen von Verlaufsdaten oder Statistiken, die eine Zell-ID der ersten Zelle und einen oder mehrere Betriebsmodi, die von der ersten Zelle unterstützt werden, in Beziehung setzen;

Empfangen von Informationen von einer versorgenden Zelle (415A) des Knotens über den Betriebsmodus der ersten Zelle;

Auslesen von Systeminformationen der ersten Zelle, wobei die Systeminformationen den Betriebsmodus der ersten Zelle angeben;

Schätzen von Interferenz oder Interferenzstatistiken, die von der ersten Zelle empfangen werden, wobei die geschätzte Interferenz oder die geschätzten Interferenzstatistiken eine Angabe des Betriebsmodus der ersten Zelle bereitstellen.

3. Verfahren nach Anspruch 1, wobei der eine oder die mehreren Messparameter der ausgewählten Messprozedur eine oder mehrere umfassen von:

einer Messzeit:

einer Zeit oder einer Verzögerung eines Messberichts;

einer Messgenauigkeit;

einer Anzahl von Zellen (415), die über die Messzeit gemessen werden sollen;

einer Zellenauswahlverzögerung;

einer Zellenneuauswahlverzögerung; und

einer Messrate für eine oder mehrere von Zellenauswahl und Zellenneuauswahl.

4. Verfahren nach Anspruch 1, umfassend:

Einholen von Informationen in Bezug auf einen Betriebsmodus einer zweiten Zelle (415A, 415C), die vom Knoten gemessen werden soll, wobei das Auswählen der Messprozedur aus der Mehrzahl von möglichen Messprozeduren ferner auf dem Betriebsmodus der zweiten Zelle basiert.

5. Verfahren nach Anspruch 1, umfassend ein Einholen von Informationen bezüglich eines Betriebsmodus, der vom Knoten nach einer Zellwechselprozedur verwendet werden soll, wobei das Einholen der Informationen bezüglich des Betriebsmodus, der vom Knoten nach der Zellwechselprozedur verwendet werden soll, eines oder mehreres umfasst von:

Einholen von vordefinierten Informationen bezüglich des Betriebsmodus des Knotens nach einer Zellwechselprozedur;

autonomem Bestimmen des Betriebsmodus des Knotens nach der Zellwechselprozedur; und

Empfangen der Informationen bezüglich des Betriebsmodus des Knotens nach der Zellwechselprozedur.

6. Verfahren nach Anspruch 5, umfassend:

Einholen von Informationen in Bezug auf einen oder mehrere Konfigurationsparameter; und

Durchführen der Zellwechselprozedur unter Verwendung der abgerufenen Informationen in Bezug auf den einen oder die mehreren Konfigurationsparameter, wobei der eine oder die mehreren Konfigurationsparameter eines oder mehrere umfassen von:

einer Trägerfrequenz;

einem Zeitdomänen-Filterkoeffizienten;

einem Hysterese-Parameter;

einem Offset oder einer Toleranz eines Zellwechsels;
einer Messbandbreite; und
einem Typ von Messung, der durchgeführt werden soll.

**7.** Verfahren nach Anspruch 1, umfassend ein Einholen von Informationen über einen Versorgungsverbesserungsgrad des Knotens in Bezug auf die erste Zelle.

**8.** Verfahren nach Anspruch 7, wobei das Einholen von Informationen über den Versorgungsverbesserungsgrad des Knotens in Bezug auf die erste Zelle umfasst:

Durchführen einer oder mehrerer Funkmessungen in Bezug auf die erste Zelle; und
Bestimmen des Versorgungsverbesserungsgrades des Knotens in Bezug auf die erste Zelle basierend auf der einen oder den mehreren Funkmessungen, die in Bezug auf die erste Zelle durchgeführt werden.

**9.** Verfahren nach Anspruch 7, wobei das Einholen von Informationen über den Versorgungsverbesserungsgrad des Knotens in Bezug auf die erste Zelle umfasst:

Durchführen einer mehrerer Funkmessungen in Bezug auf eine versorgende Zelle (415A) oder eine Nachbarzelle (415C) des Knotens; und
Bestimmen des Versorgungsverbesserungsgrades des Knotens in Bezug auf die erste Zelle basierend auf der einen oder den mehreren Funkmessungen, die in Bezug auf die versorgende Zelle (415A) oder die Nachbarzelle (415C) durchgeführt werden.

**10.** Verfahren nach Anspruch 7, wobei das Auswählen der Messprozedur aus der Mehrzahl von möglichen Messprozeduren außerdem auf den eingeholten Informationen über den Versorgungsverbesserungsgrad des Knotens in Bezug auf die erste Zelle basiert.

**11.** Verfahren nach Anspruch 7, umfassend:

Überwachen eines oder mehrerer gesendeter Referenzsignale;
Bestimmen eines Signalübertragungsmusters für die erste Zelle basierend auf dem einen oder den mehreren gesendeten Referenzsignalen; und
wobei das Auswählen der Messprozedur aus der Mehrzahl von möglichen Messprozeduren ferner auf dem bestimmten Signalübertragungsmuster für die erste Zelle basiert.

**12.** Verfahren nach Anspruch 1, umfassend ein Bestimmen eines oder mehrerer Betriebsmodi, die vom Knoten unterstützt werden, wobei das Auswählen der Messprozedur aus der Mehrzahl von möglichen Messprozeduren ferner auf dem einen oder den mehreren Betriebsmodi basiert, die vom Knoten unterstützt werden.

**13.** Verfahren nach einem der Ansprüche 1 bis 12, umfassend ein Senden von Informationen über die ausgewählte Messprozedur an einen anderen Knoten (410B, 410C).

**14.** Verfahren nach einem der Ansprüche 1 bis 13, wobei der Knoten eines von Folgenden umfasst:

eine drahtlose Vorrichtung (405A); und
einen Netzwerkknoten (410A).

**15.** Knoten (405A, 410A) des Schmalband-Internets-der-Dinge, NB-IoT, umfassend:
eine oder mehrere Prozessoren (620, 720), wobei der eine oder die mehreren Prozessoren zum Durchführen des Verfahrens nach einem der Ansprüche 1 bis 14 konfiguriert sind.

**Revendications**

**1.** Procédé dans un nœud d'Internet de choses à bande étroite, NB-IoT, (405A, 410A), comprenant :

l'obtention (504) d'informations relatives à un mode de fonctionnement d'une première cellule (415B) à mesurer par le nœud, dans lequel le mode de fonctionnement comprend l'un d'un mode en bande, d'un mode autonome et d'un mode à bande de garde ;

la sélection (508) d'une procédure de mesure parmi une pluralité de procédures de mesure possibles sur la base des informations obtenues relatives au mode de fonctionnement de la première cellule, dans lequel un ou plusieurs paramètres de mesure de la procédure de mesure sélectionnée sont adaptés au mode de fonctionnement de la première cellule ;

l'exécution (512) d'une ou plusieurs mesures dans la première cellule en utilisant la procédure de mesure sélectionnée.

**2.** Procédé selon la revendication 1, dans lequel l'obtention d'informations relatives au mode de fonctionnement de la première cellule comprend une ou plusieurs de :

l'obtention de données historiques ou de statistiques relatives à un identifiant de cellule de la première cellule et à un ou plusieurs modes de fonctionnement pris en charge par la première cellule ;

la réception d'informations, en provenance d'une cellule de desserte (415A) du nœud, relatives au mode de fonctionnement de la première cellule ;

la lecture d'informations de système de la première cellule, les informations de système indiquant le mode de fonctionnement de la première cellule ;

l'estimation d'un brouillage ou de statistiques de brouillage reçues en provenance de la première cellule, dans lequel le brouillage estimé ou les statistiques de brouillage estimées fournissent une indication du mode de fonctionnement de la première cellule.

**3.** Procédé selon la revendication 1, dans lequel les un ou plusieurs paramètres de mesure de la procédure de mesure sélectionnée comprennent un ou plusieurs de :

un temps de mesure ;

un temps ou un retard de rapport de mesure ;

une précision de mesure ;

un nombre de cellules (415) à mesurer au cours du temps de mesure ;

un retard de sélection de cellule ;

un retard de resélection de cellule ; et

un taux de mesure pour une ou plusieurs d'une sélection de cellule et d'une resélection de cellule.

**4.** Procédé selon la revendication 1, comprenant :

l'obtention d'informations relatives à un mode de fonctionnement d'une deuxième cellule (415A, 415C) à mesurer par le nœud, dans lequel la sélection de la procédure de mesure parmi la pluralité de procédures de mesure possibles est en outre basée sur le mode de fonctionnement de la deuxième cellule.

**5.** Procédé selon la revendication 1, comprenant l'obtention d'informations relatives à un mode de fonctionnement à utiliser par le nœud après une procédure de changement de cellule, dans lequel l'obtention des informations relatives au mode de fonctionnement à utiliser par le nœud après la procédure de changement de cellule comprend une ou plusieurs de :

l'obtention d'informations prédéfinies relatives au mode de fonctionnement du nœud après une procédure de changement de cellule ;

la détermination autonome du mode de fonctionnement du nœud après la procédure de changement de cellule ; et

la réception des informations relatives au mode de fonctionnement du nœud après la procédure de changement de cellule.

**6.** Procédé selon la revendication 5, comprenant :

l'obtention d'informations relatives à un ou plusieurs paramètres de configuration ; et

l'exécution de la procédure de changement de cellule en utilisant les informations obtenues relatives aux un ou plusieurs paramètres de configuration, dans lequel les un ou plusieurs paramètres de configuration comprennent un ou plusieurs de :

une fréquence de porteuse ;

un coefficient de filtrage de domaine de temps ;

un paramètre d'hystérèse ;
un décalage ou une marge de changement de cellule ;
une largeur de bande de mesure ; et
un type de mesure à effectuer.

7. Procédé selon la revendication 1, comprenant l'obtention d'informations relatives à un niveau d'amélioration de couverture du nœud par rapport à la première cellule.

8. Procédé selon la revendication 7, dans lequel l'obtention d'informations relatives au niveau d'amélioration de couverture du nœud par rapport à la première cellule comprend :

l'exécution d'une ou plusieurs mesures radio par rapport à la première cellule ; et
la détermination du niveau d'amélioration de couverture du nœud par rapport à la première cellule sur la base d'une ou plusieurs mesures radio effectuées par rapport à la première cellule.

9. Procédé selon la revendication 7, dans lequel l'obtention d'informations relatives au niveau d'amélioration de couverture du nœud par rapport à la première cellule comprend :

l'exécution d'une ou plusieurs mesures radio par rapport à une cellule de desserte (415A) ou une cellule voisine (415C) du nœud ; et
la détermination du niveau d'amélioration de couverture du nœud par rapport à la première cellule sur la base des une ou plusieurs mesures radio effectuées par rapport à la cellule de desserte (415A) ou la cellule voisine (415C).

10. Procédé selon la revendication 7, dans lequel la sélection de la procédure de mesure parmi la pluralité de procédures de mesure possibles est également basée sur les informations obtenues relatives au niveau d'amélioration de couverture du nœud par rapport à la première cellule.

11. Procédé selon la revendication 7, comprenant :

la surveillance d'un ou plusieurs signaux de référence transmis ;
la détermination d'un motif de transmission de signal pour la première cellule sur la base des un ou plusieurs signaux de référence transmis ; et
dans lequel la sélection de la procédure de mesure parmi la pluralité de procédures de mesure possibles est en outre basée sur le motif de transmission de signal déterminé pour la première cellule.

12. Procédé selon la revendication 1, comprenant la détermination d'un ou plusieurs modes de fonctionnement pris en charge par le nœud, dans lequel la sélection de la procédure de mesure parmi la pluralité de procédures de mesure possibles est en outre basée sur les un ou plusieurs modes de fonctionnement déterminés pris en charge par le nœud.

13. Procédé selon l'une quelconque des revendications 1 à 12, comprenant la transmission d'informations relatives à la procédure de mesure sélectionnée à destination d'un autre nœud (410B, 410C).

14. Procédé selon l'une quelconque des revendications 1 à 13, dans lequel le nœud comprend l'un de :

un dispositif sans fil (405A) ; et
un nœud de réseau (410A).

15. Nœud d'Internet de choses à bande étroite, NB-IoT, (405A, 410A), comprenant :
un ou plusieurs processeurs (620, 720), les un ou plusieurs processeurs étant configurés pour effectuer le procédé selon l'une quelconque des revendications 1 à 14.

105A  105B  105C  105D  105E  105F  105G  105H  105I

FIGURE 1

EP 3 403 345 B1

210

205A

205B

FIGURE 2

FIGURE 3

FIGURE 4

500

```
          ┌──────────────┐
          │    Start     │
          └──────┬───────┘
                 │
                 ▼
```

504

Obtain information related to an operational mode of a first cell to be measured by the node.

508

Select a measurement procedure from a plurality of possible measurement procedures based on the obtained information related to the operational mode of the first cell, wherein one or more measurement parameters of the selected measurement procedure are adapted to the operational mode of the first cell.

512

Perform one or more measurements in the first cell using the selected measurement procedure.

```
          ┌──────────────┐
          │     End      │
          └──────────────┘
```

FIGURE 5

EP 3 403 345 B1

FIGURE 6

EP 3 403 345 B1

410

750

Transceiver
710

Node
Processor
720

Memory
730

Network
Interface
740

FIGURE 7

FIGURE 8

FIGURE 9

EP 3 403 345 B1

410

Determining
Module

1010

Communication
Module

1020

Receiving
Module

1030

FIGURE 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015112072 A1

- WO 2015116870 A1

**Non-patent literature cited in the description**

- **ZTE.** UL power control for NB-IoT. *3GPP TSG RAN WG1 NG-IoT Ad-Hoc Meeting, R1-160059,* January 2016

- NB-IoT Way forward for RRM. *R4-158205*